(19) Europäisches Patentamt
European Patent Office
Office européen des brevets

(11) **EP 4 297 491 A1**

(12) **EUROPEAN PATENT APPLICATION**
published in accordance with Art. 153(4) EPC

(43) Date of publication:
**27.12.2023 Bulletin 2023/52**

(21) Application number: **22762400.4**

(22) Date of filing: **22.02.2022**

(51) International Patent Classification (IPC):
**H04W 48/20** (2009.01)

(52) Cooperative Patent Classification (CPC):
**H04W 36/00; H04W 36/08; H04W 36/30; H04W 48/20**

(86) International application number:
**PCT/CN2022/077278**

(87) International publication number:
**WO 2022/183934 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 01.03.2021 CN 202110225663
17.03.2021 CN 202110284775

(71) Applicant: **Huawei Technologies Co., Ltd.**
**Shenzhen, Guangdong 518129 (CN)**

(72) Inventors:
• **KONG, Fanhua**
**Shenzhen, Guangdong 518129 (CN)**
• **KUANG, Yiru**
**Shenzhen, Guangdong 518129 (CN)**
• **XU, Haibo**
**Shenzhen, Guangdong 518129 (CN)**
• **XUE, Yifan**
**Shenzhen, Guangdong 518129 (CN)**
• **XUE, Lixia**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **CELL RESELECTION METHOD AND DEVICE**

(57)    This application relates to a cell reselection method and a device. During cell reselection, it is determined whether a cell in a first candidate cell meets a first condition. When a first cell in the first candidate cell meets the first condition, the first cell is reselected to. The first condition is related to a coverage enhancement gain of a cell, which is equivalent to establishing a relationship between a determining condition for performing cell reselection by a terminal device and a coverage enhancement support status of the cell. Impact of coverage enhancement on cell reselection is considered. In this manner, the terminal device can more easily reselect to a cell that supports coverage enhancement, thereby improving communication quality of the terminal device.

FIG. 5

**Description**

**CROSS-REFERENCE TO RELATED APPLICATIONS**

This application claims priority to Chinese Patent Application No. 202110225663.3, filed with the China National Intellectual Property Administration on March 1, 2021 and entitled "CELL RESELECTION METHOD, TERMINAL, AND NETWORK DEVICE", which is incorporated herein by reference in its entirety; and this application claims priority to Chinese Patent Application No. 202110284775.6, filed with the China National Intellectual Property Administration on March 17, 2021 and entitled "CELL RESELECTION METHOD AND DEVICE", which is incorporated herein by reference in its entirety.

**TECHNICAL FIELD**

This application relates to the field of communication technologies, and in particular, to a cell reselection method and a device.

**BACKGROUND**

Because a hardware capability of reduced capability user equipment (reduced capability UE, redcap UE) is reduced, compared with legacy (legacy) UE, a quantity of antennas and an operating bandwidth of the redcap UE are reduced, and processing time is increased. The legacy UE usually has four antennas (4R), and the redcap UE has a smaller quantity of antennas, for example, one antenna (1R). If a distance between the legacy LTE and a base station and a distance between the redcap UE and the base station are the same, a reference signal received power (reference signal received power, RSRP) value obtained by the redcap LTE through measurement is less than an RSRP value obtained by the legacy UE through measurement.

When performing cell reselection, user equipment (user equipment, LTE) needs to compare RSRP obtained by a neighbor cell through measurement with an RSRP threshold of the neighbor cell, and only when a measured RSRP value is greater than the RSRP threshold, there is an opportunity of reselecting to another cell. Currently, when the redcap UE performs cell reselection, a used RSRP threshold is the same as an RSRP threshold used by the legacy UE. Because the measured RSRP value of the legacy LTE is large, a corresponding RSRP threshold used by the legacy UE is also large. However, the measured RSRP value of the redcap UE may be small due to limited capabilities. In this case, if the redcap UE performs cell reselection based on such an RSRP threshold, the redcap UE may fail to reselect to the neighbor cell.

Currently, to improve a coverage capability of UE, some cells support a coverage enhancement technology. For example, through repeated sending, power control, or the like, UE (for example, redcap UE) with a weak capability can also normally receive data. For example, when the redcap UE performs cell reselection because data cannot be normally received in a serving cell, and a neighbor cell of the serving cell supports coverage enhancement but the serving cell does not support coverage enhancement, the redcap UE preferentially reselects to the neighbor cell that supports coverage enhancement. However, as described above, the RSRP value measured by the redcap UE is small, and the RSRP threshold of the neighbor cell is large. Consequently, the redcap UE may fail to reselect to the neighbor cell.

**SUMMARY**

Embodiments of this application provide a cell reselection method and a device, to increase a probability that UE reselects to a cell that supports coverage enhancement.

According to a first aspect, a cell reselection method is provided. The method may be performed by a terminal device, or may be performed by a larger device including a terminal device, or may be performed by a chip system or another functional module. The chip system or the functional module can implement a function of the terminal device. The method includes: during cell reselection, determining whether a cell in a first candidate cell meets a first condition, where the first candidate cell includes one or more cells; and when a first cell in the first candidate cell meets the first condition, reselecting to the first cell. That the first cell meets the first condition includes: The first cell meets that a value of a first parameter is greater than a first value in first duration, where the first value is related to a second parameter of the first cell, and the second parameter indicates a coverage enhancement gain of a cell.

In this embodiment of this application, during cell reselection, if the terminal device needs to determine whether the first cell can be reselected to, the terminal device may determine whether the first cell meets the first condition. If the first condition is met, the first cell may be reselected to. The first condition relates to the first value, and the first value is, for example, related to a quality threshold of a neighbor cell during cell reselection. In addition, the first value is further related to a coverage enhancement gain of the first cell. In other words, a relationship is established between a determining condition for performing cell reselection by the terminal device and a coverage enhancement support status of a cell. Impact of coverage enhancement on cell reselection is considered. In this manner, the terminal device can more easily reselect to a cell that supports coverage enhancement, thereby improving communication quality of the terminal device.

With reference to the first aspect, in a first optional implementation of the first aspect, the first parameter is RSRQ or RSRP. In addition, the first parameter may alternatively be another parameter. For example, a parameter that can indicate quality of a cell may be used as the first parameter.

With reference to the first optional implementation of the first aspect, in a second optional implementation of the first aspect, the first parameter is the RSRQ, the first value is a difference between a first threshold and a value of the second parameter of the first cell, and the first threshold is a value threshold of RSRQ of the cell during cell reselection; and/or the first parameter is the RSRP, the first value is a difference between a second threshold and a value of the second parameter of the first cell, and the second threshold is a value threshold of RSRP of the cell during cell reselection. In this implementation, impact of coverage enhancement on cell reselection is considered, and an RSRP threshold of the cell that supports coverage enhancement is reduced by adding the second parameter, so that the terminal device can more easily reselect to the cell that supports coverage enhancement.

With reference to the first optional implementation of the first aspect, in a third optional implementation of the first aspect, the first value is related to the second parameter and a third parameter, and the third parameter indicates a coverage enhancement gain of a serving cell of the terminal device. In this implementation, the first value is not only related to whether the to-be-reselected cell supports coverage enhancement, but also related to whether the serving cell supports coverage enhancement. This is equivalent to that both impact of coverage enhancement of the neighbor cell on cell reselection and impact of coverage enhancement of the serving cell on cell reselection are considered, thereby minimizing a problem that the terminal device still reselects to a neighbor cell that is on a high-priority frequency and that does not support coverage enhancement when the serving cell supports coverage enhancement.

With reference to the third optional implementation of the first aspect, in a fourth optional implementation of the first aspect, the first parameter is the RSRQ, $S=Q+offset_s - offset_n$, S represents the first value, Q represents a first threshold, $offset_s$ represents a value of the third parameter, $offset_n$ represents a value of the second parameter of the first cell, and the first threshold is a value threshold of RSRQ of the first cell during cell reselection; and/or the first parameter is the RSRP, $S=P+offset_s - offset_n$, S represents the first value, $offset_s$ represents a value of the third parameter, $offset_n$ represents a value of the second parameter of the first cell, P represents a second threshold, and the second threshold is a value threshold of RSRP of the first cell during cell reselection. An implementation of the first value is provided. Certainly, the implementation of the first value is not limited thereto. In this manner, whether the serving cell and the to-be-reselected cell support coverage enhancement is considered, so that the terminal device can camp on the cell that supports coverage enhancement as much as possible.

With reference to any one of the first aspect, or the first optional implementation of the first aspect to the fourth optional implementation of the first aspect, in a fifth optional implementation of the first aspect, the method further includes: when no first candidate cell meets the first condition, determining whether a cell in a second candidate cell meets a second condition; and when a second cell in the second candidate cell meets the second condition, reselecting to the second cell. That the second cell meets the second condition includes: The serving cell of the terminal device meets that a value of a first parameter is less than a second value in the first duration, and the second cell meets that a value of the first parameter is greater than a third value in the first duration, where the second value is related to a third parameter, the third value is related to a second parameter of the second cell, and the third parameter indicates the coverage enhancement gain of the serving cell. If no first candidate cell meets the first condition, the terminal device may further determine whether a cell in the second candidate cell meets the second condition. The second condition relates to the second value and the third value. The third value is, for example, related to the quality threshold of the neighbor cell (or the to-be-reselected cell) during cell reselection, and the second value is related to a quality threshold of the serving cell during cell reselection. In addition, the third value is further related to a coverage enhancement gain of the second cell, and the second value is further related to the coverage enhancement gain of the serving cell. In other words, a relationship is established between the determining condition of the terminal device and coverage enhancement support statuses of the neighbor cell and the serving cell. Impact of coverage enhancement on cell reselection is considered. In this manner, the terminal device can more easily reselect to the cell that supports coverage enhancement, thereby improving communication quality of the terminal device.

With reference to the fifth optional implementation of the first aspect, in a sixth optional implementation of the first aspect, the first parameter is the RSRQ, the second value is a sum of a third threshold and a value of the third parameter, and the third threshold is a value threshold of RSRQ of the serving cell during cell reselection; and/or the first parameter is the RSRP, the second value is a sum of a fourth threshold and a value of the third parameter, and the fourth threshold is a value threshold of RSRP of the serving cell during cell reselection. An implementation of the second value is provided. Certainly, the implementation of the second value is not limited thereto.

With reference to the fifth optional implementation of the first aspect or the sixth optional implementation of the first aspect, in a seventh optional implementation of the first aspect, the first parameter is the RSRQ, the third value is a difference between a fifth threshold and a value of the second parameter of the second cell, and the fifth threshold is the value threshold of the RSRQ of the cell during cell reselection; and/or the first parameter is the RSRP, the third value is a difference between a sixth threshold and a value of the second parameter of the second cell, and the sixth threshold is the value threshold of the RSRP of the cell during cell reselection. An implementation of the third value is provided. Certainly, the implementation of the third value is not limited thereto.

With reference to any one of the first aspect, or the first optional implementation of the first aspect to the fourth optional implementation of the first aspect, in an eighth optional implementation of the first aspect, the method further includes: when no first candidate cell meets the first condition, determining a measurement value of a third candidate cell, where the third candidate cell includes a first-type cell and a second-type cell, the first-type cell supports coverage enhancement, the second-type cell does not support coverage enhancement, and a measurement value of the first-type cell is determined based on a value of a first parameter obtained by the terminal device by measuring the first-type cell and a value of a second parameter of the first-type cell; and reselecting to a third cell in the third candidate cell based on the measurement value of the third candidate cell. If no first candidate cell meets the first condition, the terminal device may determine the measurement value of the first-type cell. Alternatively, if no first candidate cell meets the first condition, and no second candidate cell meets the second condition, the terminal device may continue to perform selection from the third candidate cell. The terminal device may perform selection from the third candidate cell in a plurality of manners. A first manner is described herein. In this manner, the measurement value of the third candidate cell is related to whether the cell supports coverage enhancement. This is equivalent to establishing a relationship between the determining condition of the terminal device during cell reselection and a coverage enhancement support status of the to-be-reselected cell. Impact of coverage enhancement on cell reselection is considered. In this manner, the terminal device can more easily reselect to the cell that supports coverage enhancement, thereby improving communication quality of the terminal device.

With reference to the eighth optional implementation of the first aspect, in a ninth optional implementation of the first aspect, the third cell is a cell with a largest measurement value in the third candidate cell; or the third cell is a cell whose measurement value is in a first interval and that corresponds to a largest quantity of downlink beams that are greater than a first quality threshold, and the first interval indicates a best cell range. If no best cell range is configured in a network, the terminal device may sort, in descending order of measurement values, cells included in the third candidate cell, and reselect to the cell with the largest measurement value. If a best cell range is configured in a network, the terminal device may sort, in descending order of measurement values, cells included in the third candidate cell, and select a third-type cell from the cells. The third-type cell includes one or more cells. The third-type cell is a cell whose measurement value is in the first interval. The first interval may indicate the best cell range, or the first interval may be another interval range. Each cell has a corresponding quantity of downlink beams, and the terminal device may reselect to a cell that corresponds to a largest quantity of downlink beams in the third-type cell, to obtain better communication quality.

With reference to any one of the first aspect, or the first optional implementation of the first aspect to the fourth optional implementation of the first aspect, in a tenth optional implementation of the first aspect, the method further includes: when no first candidate cell meets the first condition, determining a first portion of cells from a third candidate cell, where the first portion of cells include at least one cell; and reselecting to a third cell in the at least one cell. If no first candidate cell meets the first condition, the terminal device may determine a measurement value of a first-type cell. Alternatively, if no first candidate cell meets the first condition, and no second candidate cell meets the second condition, the terminal device may continue to perform selection from the third candidate cell. The terminal device may perform selection from the third candidate cell in a plurality of manners. For example, the terminal device may select the first portion of cells from the third candidate cell, and then select the third cell from the first portion of cells. If no cell in the third candidate cells meets a requirement of the first portion of cells, it indicates that there is no cell suitable for reselection. In this case, the terminal device may stop cell reselection, to reduce power consumption of the terminal device and reduce a probability that the terminal device selects a poor cell.

With reference to the tenth optional implementation of the first aspect, in an eleventh optional implementation of the first aspect, a measurement value of the at least one cell is greater than a seventh threshold, and a measurement value of one of the at least one cell is determined based on a value of a first parameter obtained by the terminal device by measuring the cell. In this implementation, the second parameter does not need to be added for the cell that supports coverage enhancement, but the seventh threshold is set for the first parameter (for example, the RSRP or the RSRQ), and reselection is performed in a cell that exceeds the seventh threshold. Compared with the solution in which the second parameter is added to the cell that supports coverage enhancement, this implementation is simpler.

With reference to the eleventh optional implementation of the first aspect, in a twelfth optional implementation of the first aspect, the third cell is a cell that supports coverage enhancement and has a largest measurement value in the at least one cell. In other words, during cell reselection, the terminal device not only considers the measurement value, but also considers the coverage enhancement support status, to reselect, as much as possible, to the cell that supports coverage enhancement.

With reference to the tenth optional implementation of the first aspect, in a thirteenth optional implementation of the first aspect, a measurement value of the at least one cell is in a first interval, a quantity of downlink beams that correspond to the at least one cell and that are greater than a first quality threshold is greater than an eighth threshold, and the first interval indicates a best cell range. This implementation is applicable to a case in which a best cell range is configured for a network. For example, the eighth threshold is determined by the terminal device, or is configured by a network device, or may be specified in a protocol. In this implementation, the second parameter does not need to be added for the cell that supports coverage enhancement, but the eighth threshold is set for the first parameter (for example, the RSRP or the RSRQ), and reselection is performed in a cell that exceeds the eighth threshold. Compared with the solution in which the second parameter is added to the cell that supports coverage enhancement, this implementation is simpler. In addition, a cell with a large quantity of downlink beams is first selected, and cell reselection is performed from the cell, so that the cell with a large quantity of downlink beams can be selected as much as possible, to improve communication quality of the terminal device.

With reference to the thirteenth optional implementation of the first aspect, in a fourteenth optional implementation of the first aspect, the third cell is a cell, in the at least one cell, that supports coverage enhancement and that corresponds to a largest quantity of downlink beams that are greater than a first quality threshold. In other words, during cell reselection, the terminal device not only considers a quantity of downlink beams, but also considers the coverage enhancement support status, to reselect, as much as possible, to the cell that supports coverage enhancement.

With reference to the tenth optional implementation of the first aspect, in a fifteenth optional implementation of the first aspect, a measurement value of the at least one cell is in a first interval. This implementation is applicable to a case in which a best cell range is configured for a network. For example, the first interval may indicate the best cell range.

With reference to the fifteenth optional implementation of the first aspect, in a sixteenth optional implementation of the first aspect, the method further includes: determining an adjustment value of a quantity of downlink beams of a cell that supports coverage enhancement and that is in the at least one cell, where the adjustment value is determined based on the quantity of downlink beams of the cell that supports coverage enhancement and a fourth parameter, and the fourth parameter indicates a quantity of downlink beams of a cell.

With reference to the sixteenth optional implementation of the first aspect, in a seventeenth optional implementation of the first aspect, the third cell is a cell that corresponds to a largest quantity of downlink beams in the at least one cell.

In this manner, the quantity of downlink beams, of the cell that supports coverage enhancement, that is used as a selection basis in a cell reselection process is increased, and it is also specified that UE reselects to the cell with the largest quantity of downlink beams. Therefore, this helps the terminal device reselect, as much as possible, to the cell that supports coverage enhancement, to improve communication quality of the terminal device. In this implementation, the second parameter does not need to be added to the cell that supports coverage enhancement, but the adjustment value is added to the quantity of downlink beams of the cell that supports coverage enhancement. It can be learned that impact of coverage enhancement on cell reselection may be considered in a plurality of implementations, and the implementations are flexible.

With reference to any one of the first aspect, or the first optional implementation of the first aspect to the fourth optional implementation of the first aspect, in an eighteenth optional implementation of the first aspect, the method further includes: when no first candidate cell meets the first condition, determining a measurement value of a third candidate cell; and reselecting to a third cell with a largest measurement value in the third candidate cell. The determining a measurement value of a third candidate cell includes one or more of the following:

a measurement value of a first-type cell included in the third candidate cell is determined based on a value of a first parameter obtained by the terminal device by measuring the first-type cell, the first-type cell includes one or more cells, and the first-type cell is a cell that does not support coverage enhancement or a reduced capability terminal device;

a measurement value of a second-type cell included in the third candidate cell is determined based on a value of a first parameter obtained by the terminal device by measuring the second-type cell and a value of a fifth parameter of the second-type cell, the second-type cell includes one or more cells, the second-type cell is a cell that does not support coverage enhancement but supports a reduced capability terminal device, and the fifth parameter indicates whether the reduced capability terminal device is supported;

a measurement value of a third-type cell included in the third candidate cell is determined based on a value of a first parameter obtained by the terminal device by measuring the third-type cell and a value of a second parameter of the third-type cell, the third-type cell includes one or more cells, and the third-type cell is a cell that supports coverage enhancement but does not support a reduced capability terminal device; or

a measurement value of a fourth-type cell included in the third candidate cell is determined based on a value of a first parameter obtained by the terminal device by measuring the fourth-type cell, a value of a fifth parameter of the fourth-type cell, and a value of a second parameter of the fourth-type cell, the fourth-type cell includes one or more cells, the fourth-type cell is a cell that supports coverage enhancement and a reduced capability terminal device, and the fifth parameter indicates whether the reduced capability terminal device is supported. If no first candidate cell meets the first condition, the terminal device may determine the measurement value of the first-type cell. Alternatively, if no first candidate cell meets the first condition, and no second candidate cell meets the second condition, the terminal device may continue to perform selection from the third candidate cell. The terminal device may perform selection from the third candidate cell in a plurality of manners. One of the manners is provided herein. The terminal device may determine the measurement value of the third candidate cell based on whether the cell supports the reduced capability terminal device and/or supports coverage enhancement, so that the terminal device selects the third cell based on the finally determined measurement value. In this way, the terminal device can preferentially reselect, as much as possible, to a cell that supports both the reduced capability terminal device and coverage enhancement, to improve communication quality of the terminal device.

With reference to any one of the first aspect, or the first optional implementation of the first aspect to the eighteenth optional implementation of the first aspect, in a nineteenth optional implementation of the first aspect, the method further includes: receiving a first message from the serving cell, where the first message indicates whether the neighbor cell of the serving cell supports the reduced capability terminal device and/or supports coverage enhancement. In this embodiment of this application, the serving cell may indicate a status of the neighbor cell, for example, indicate whether the neighbor cell supports the reduced capability terminal device. Therefore, during cell reselection, the reduced capability terminal device may select the neighbor cell, to minimize a probability of selecting a cell that does not support the reduced capability terminal device. For example, the serving cell may also indicate whether the neighbor cell supports coverage enhancement. In this case, regardless of whether the reduced capability terminal device or a common terminal device performs cell reselection, the coverage enhancement support status of the neighbor cell may be learned in advance. For example, the reduced capability terminal device may reselect, as much as possible, to a cell that supports coverage enhancement, to improve communication quality of the reduced capability terminal device.

With reference to the nineteenth optional implementation of the first aspect, in a twentieth optional implementation of the first aspect, that the first message indicates whether the neighbor cell supports the reduced capability terminal device includes: The first message includes first indication information, and the first indication information indicates that the neighbor cell supports the reduced capability terminal device or does not support the reduced capability terminal device; when including first indication information, the first message indicates that the neighbor cell supports the reduced capability terminal device; or when not including first indication information, the first message indicates that the neighbor cell does not support the reduced capability terminal device; when including a value of a fifth parameter of the neighbor cell, the first message indicates that the neighbor cell supports the reduced capability terminal device; or when not including a value of a fifth parameter of the neighbor cell, the first message indicates that the neighbor cell does not support the reduced capability terminal device, where the fifth parameter indicates whether the reduced capability terminal device is supported; or when a value of a fifth parameter of the neighbor cell included in the first message is not equal to 0, the first message indicates that the neighbor cell supports the reduced capability terminal device; or when a value of a fifth parameter of the neighbor cell included in the first message is equal to 0, the first message indicates that the neighbor cell does not support the reduced capability terminal device, where the fifth parameter indicates whether the reduced capability terminal device is supported.

With reference to the nineteenth optional implementation of the first aspect, in a twenty-first optional implementation of the first aspect, that the first message indicates whether the neighbor cell supports the reduced capability terminal device includes one or more of the following:

when indicating that the neighbor cell supports coverage enhancement, the first message indicates that the neighbor cell supports the reduced capability terminal device; or when indicating that the neighbor cell does not support coverage enhancement, the first message indicates that the neighbor cell does not support the reduced capability terminal device;
when indicating that the neighbor cell configures a random access resource for the reduced capability terminal device, the first message indicates that the neighbor cell supports the reduced capability terminal device; or when indicating that the neighbor cell does not configure a random access resource for the reduced capability terminal device, the first message indicates that the neighbor cell does not support the reduced capability terminal device; or when indicating that the neighbor cell configures an initial uplink BWP for the reduced capability terminal device, the first message indicates that the neighbor cell supports the reduced capability terminal device; or when indicating that the neighbor cell does not configure an initial uplink BWP for the reduced capability terminal device, the first message indicates that the neighbor cell does not support the reduced capability terminal device.

The first message may indicate, in a plurality of indication manners, whether the neighbor cell supports the reduced capability terminal device, for example, in an implicit manner or in an explicit manner. This is flexible. In addition, the indication manner is not limited to the enumerated manners, and another indication manner is also included in the protection scope of embodiments of this application.

With reference to the nineteenth optional implementation of the first aspect, the twentieth optional implementation of the first aspect, or the twenty-first optional implementation of the first aspect, in a twenty-second optional implementation of the first aspect, that the first message indicates whether the neighbor cell supports coverage enhancement includes one or more of the following:

when including a value of a second parameter of the neighbor cell, the first message indicates that the neighbor cell supports coverage enhancement; or when not including a value of a second parameter of the neighbor cell, the first message indicates that the neighbor cell does not support coverage enhancement;

when a value of a second parameter of the neighbor cell included in the first message is not equal to 0, the first message indicates that the neighbor cell supports coverage enhancement; or when a value of a second parameter of the neighbor cell included in the first message is equal to 0, the first message indicates that the neighbor cell does not support coverage enhancement;

the first message includes second indication information, and the second indication information indicates whether the neighbor cell supports coverage enhancement or does not support coverage enhancement; or

when including second indication information, the first message indicates that the neighbor cell supports coverage enhancement; or when not including second indication information, the first message indicates that the neighbor cell does not support coverage enhancement.

The first message may indicate, in a plurality of indication manners, whether the neighbor cell supports coverage enhancement, for example, in an implicit manner or in an explicit manner. This is flexible. In addition, the indication manner is not limited to the enumerated manners, and another indication manner is also included in the protection scope of embodiments of this application.

According to a second aspect, another cell reselection method is provided. The method may be performed by a network device, or may be performed by a chip system or another functional module. The chip system or the functional module can implement a function of the network device. For example, the network device is an access network device, for example, a base station. The method includes: determining whether a neighbor cell has a first capability, where the first capability includes supporting a reduced capability terminal device and/or supporting coverage enhancement; and sending a first message in a serving cell of a terminal device, where the first message indicates whether the neighbor cell has the first capability, and whether the neighbor cell has the first capability is used by the terminal device to perform cell reselection.

With reference to the second aspect, in a first optional implementation of the second aspect, that the first message indicates whether the neighbor cell supports the reduced capability terminal device includes: The first message includes first indication information, and the first indication information indicates that the neighbor cell supports the reduced capability terminal device or does not support the reduced capability terminal device; when including first indication information, the first message indicates that the neighbor cell supports the reduced capability terminal device; or when not including first indication information, the first message indicates that the neighbor cell does not support the reduced capability terminal device; when including a value of a fifth parameter of the neighbor cell, the first message indicates that the neighbor cell supports the reduced capability terminal device; or when not including a value of a fifth parameter of the neighbor cell, the first message indicates that the neighbor cell does not support the reduced capability terminal device, where the fifth parameter indicates whether the reduced capability terminal device is supported; or when a value of a fifth parameter of the neighbor cell included in the first message is not equal to 0, the first message indicates that the neighbor cell supports the reduced capability terminal device; or when a value of a fifth parameter of the neighbor cell included in the first message is equal to 0, the first message indicates that the neighbor cell does not support the reduced capability terminal device, where the fifth parameter indicates whether the reduced capability terminal device is supported.

With reference to the second aspect, in a second optional implementation of the second aspect, that the first message indicates whether the neighbor cell supports the reduced capability terminal device includes one or more of the following:

when indicating that the neighbor cell supports coverage enhancement, the first message indicates that the neighbor cell supports the reduced capability terminal device; or when indicating that the neighbor cell does not support coverage enhancement, the first message indicates that the neighbor cell does not support the reduced capability terminal device;

when indicating that the neighbor cell configures a random access resource for the reduced capability terminal device, the first message indicates that the neighbor cell supports the reduced capability terminal device; or when indicating that the neighbor cell does not configure a random access resource for the reduced capability terminal device, the first message indicates that the neighbor cell does not support the reduced capability terminal device; or

when indicating that the neighbor cell configures an initial uplink BWP for the reduced capability terminal device, the first message indicates that the neighbor cell supports the reduced capability terminal device; or when indicating that the neighbor cell does not configure an initial uplink BWP for the reduced capability terminal device, the first message indicates that the neighbor cell does not support the reduced capability terminal device.

With reference to the second aspect, the first optional implementation of the second aspect, or the second optional implementation of the second aspect, in a third optional implementation of the second aspect, that the first message indicates whether the neighbor cell supports coverage enhancement includes one or more of the following:

when including a value of a second parameter of the neighbor cell, the first message indicates that the neighbor cell supports coverage enhancement; or when not including a value of a second parameter of the neighbor cell, the first message indicates that the neighbor cell does not support coverage enhancement, where the second parameter indicates a coverage enhancement gain of the neighbor cell;
when a value of a second parameter of the neighbor cell included in the first message is not equal to 0, the first message indicates that the neighbor cell supports coverage enhancement; or when a value of a second parameter of the neighbor cell included in the first message is equal to 0, the first message indicates that the neighbor cell does not support coverage enhancement, where the second parameter indicates a coverage enhancement gain of the neighbor cell;
the first message includes second indication information, and the second indication information indicates whether the neighbor cell supports coverage enhancement or does not support coverage enhancement; or
when including second indication information, the first message indicates that the neighbor cell supports coverage enhancement; or when not including second indication information, the first message indicates that the neighbor cell does not support coverage enhancement.

For technical effect brought by the second aspect or various optional implementations of the second aspect, refer to descriptions of technical effect of the first aspect or corresponding implementations.

According to a third aspect, a communication apparatus is provided. The communication apparatus may be the terminal device according to either of the first aspect and the second aspect. The communication apparatus has a function of the terminal device. The terminal device is, for example, a base station, or a baseband apparatus in a base station. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

The processing unit is configured to: during cell reselection, determine whether a cell in a first candidate cell meets a first condition, where the first candidate cell includes one or more cells.

The processing unit is further configured to: when a first cell in the first candidate cell meets the first condition, reselect to the first cell.

That the first cell meets the first condition includes:

the first cell meets that a value of a first parameter is greater than a first value in first duration, where the first value is related to a second parameter of the first cell, and the second parameter indicates a coverage enhancement gain of a cell.

In an optional implementation, the communication apparatus further includes a storage unit. The processing unit is configured to: be coupled to the storage unit, and execute a program or instructions in the storage unit, to enable the communication apparatus to perform a function of the terminal device according to either of the first aspect and the second aspect.

According to a fourth aspect, a communication apparatus is provided. The communication apparatus may be the network device according to either of the first aspect and the second aspect. The communication apparatus has a function of the network device. The network device is, for example, a base station, or a baseband apparatus in a base station. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions of the third aspect.

The processing unit is configured to determine whether a neighbor cell has a first capability, where the first capability includes supporting a reduced capability terminal device and/or supporting coverage enhancement.

The transceiver unit (or a sending unit) is configured to send a first message in a serving cell of a terminal device, where the first message indicates whether the neighbor cell has the first capability, and whether the neighbor cell has the first capability is used for the terminal device to perform cell reselection.

In an optional implementation, the communication apparatus further includes a storage unit. The processing unit is configured to: be coupled to the storage unit, and execute a program or instructions in the storage unit, to enable the communication apparatus to perform a function of the network device according to either of the first aspect and the second aspect.

According to a fifth aspect, a computer-readable storage medium is provided. The computer-readable storage medium is configured to store a computer program or instructions. When the computer program or the instructions is/are run, the method performed by the terminal device or the network device in the foregoing aspects is implemented.

According to a sixth aspect, a computer program product including instructions is provided. When the computer program product runs on a computer, the methods according to the foregoing aspects are implemented.

## BRIEF DESCRIPTION OF DRAWINGS

FIG. 1 is a schematic diagram of a coverage range of redcap UE;
FIG. 2 is a schematic diagram in which redcap UE cannot re-access a cell supporting coverage enhancement;
FIG. 3 is another schematic diagram in which redcap UE cannot re-access a cell supporting coverage enhancement;
FIG. 4 is a schematic diagram of an application scenario according to an embodiment of this application;
FIG. 5 is a flowchart of a cell reselection method according to an embodiment of this application;
FIG. 6 is a schematic block diagram of a communication apparatus according to an embodiment of this application;
FIG. 7 is a schematic block diagram of a terminal device according to an embodiment of this application; and
FIG. 8 is a schematic block diagram of a network device according to an embodiment of this application.

## DESCRIPTION OF EMBODIMENTS

To make objectives, technical solution, and advantages of embodiments of this application clearer, the following further describes embodiments of this application in detail with reference to accompanying drawings.

The following describes some terms or concepts in embodiments of this application, to facilitate understanding by a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to a terminal device in the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), Internet of things (Internet of things, IoT), virtual reality (virtual reality, VR), augmented reality (augmented reality, AR), industrial control (industrial control), self driving (self driving), remote medical (remote medical), a smart grid (smart grid), smart furniture, smart office, smart wearables, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like. For ease of description, in embodiments of this application, an example in which the terminal device is UE is used for description.

For example, a type of UE concerned in embodiments of this application is redcap UE. A reason why the LTE is referred to as redcap UE is that compared with existing common UE (or referred to as legacy LTE), a redcap LTE device usually supports only a lower bandwidth, for example, 20 MHz, and supports fewer transmit and receive antennas, for example, supports only 1T1R or 1T2R. According to research content of an existing subject, the redcap UE includes three types of low-capability UE: a wearable product, a video surveillance device, and an industrial sensor device.

A network device in embodiments of this application includes, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) and a transmission reception point (transmission reception point, TRP) in a communication system, a base station evolved after the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks of a same access technology mentioned above, or may support networks of different access technologies mentioned above. The base station may include one or more co-site or non-co-site transmission receiving points. Alternatively, the network device may be a radio controller, a central unit (central unit, CU), and/or a distributed unit (distributed unit, DU) in a cloud radio access network (cloud radio access network, CRAN) scenario. Alternatively, the network device may be a server, a wearable device, a vehicle-mounted device, or the like. For example, a network device in the vehicle to everything (vehicle to everything, V2X) technology may be a road side unit (road side unit, RSU). The following uses an example in which the access network device is a base station for description. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

A coverage enhancement technology includes, for example, a downlink coverage enhancement technology, and mainly includes means such as multiple-input multiple-output (multiple-input multiple-output, MIMO), repeated transmission, or power control, to improve coverage of LTE, so that UE with weak coverage (for example, redcap LTE) can also normally receive data like legacy UE (for example, 4R UE).

In embodiments of this application, unless otherwise specified, a quantity of nouns represents "a singular noun or a plural noun", that is, "one or more". "At least one" means one or more, and "a plurality of" means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. A character "/" usually indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c. Herein, a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of obj ects. For example, a first threshold and a second threshold may be a same threshold, or may be different thresholds. In addition, this type of name does not indicate that values, corresponding parameters, priorities, importance degrees, or the like of the two thresholds are different. In addition, step numbers in embodiments described in this application are merely used to distinguish between different steps, but are not used to limit a sequence of the steps. For example, step S501 may be performed before step S502, or may be performed after step S502, or may be performed at the same time with step S502.

A frequency of a new radio (new radio, NR) base station is higher than that of a long term evolution (long term evolution, LTE) base station. Therefore, if a site in which the LTE base station is originally deployed is used to deploy the NR base station, coverage shrinks. The legacy UE is usually 4R. Therefore, coverage of the NR base station for the legacy UE can be compensated to an extent through a plurality of antennas of the legacy UE. However, currently, the redcap LTE may be supported. For example, the redcap UE is 1R LTE. In this case, coverage of the NR base station for the redcap UE is definitely not better than that for the legacy UE. A range in which the redcap UE can correctly receive data is smaller than a range in which the legacy UE can correctly receive data. Consequently, there is a coverage gap between cells of the redcap UE, or a coverage gap of the redcap UE is larger than a coverage gap of the legacy UE.

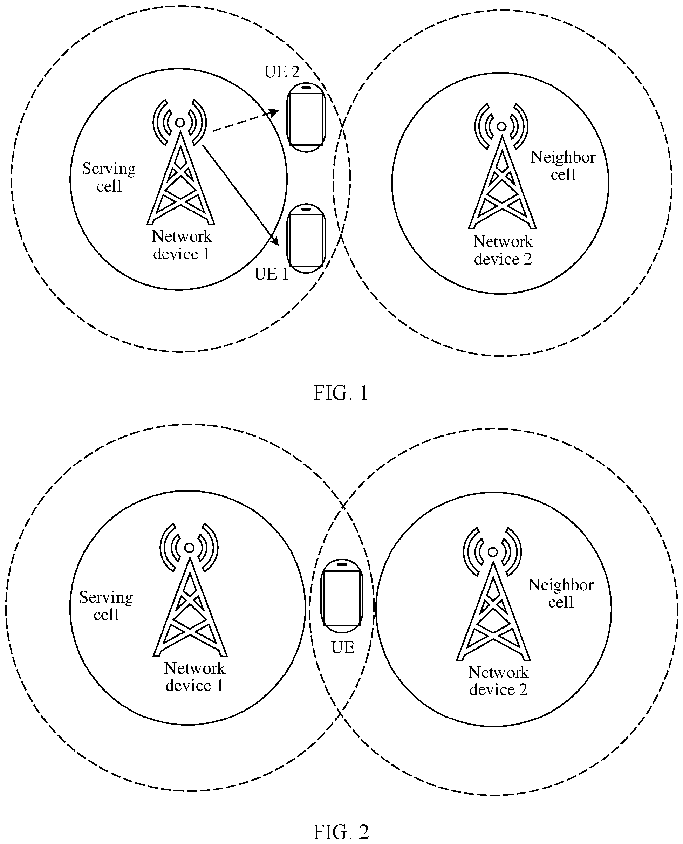

For example, the legacy UE is 4R UE and the redcap UE is 1R UE. A reason why the coverage for the 4R UE is better than that for the 1R UE is as follows: In the standard, a largest value among RSRP values measured by four antennas is defined as an RSRP value measured by the 4R UE. However, the 1R UE has only one antenna. Therefore, the RSRP value measured by the 4R LTE may be greater than an RSRP value measured by the 1R LTE. If the 1R UE wants to have the same RSRP value as the 4R LTE, the 1R LTE needs to be closer to a base station. In addition, even if the RSRP values measured by the 1R UE and the 4R UE are the same, because the 4R UE has a larger quantity of antennas and can perform maximum ratio combining, an overall signal-to-noise ratio (signal-to-noise ratio, SNR) of the 4R UE is still greater than that of the 1R UE. Therefore, a bit error rate (bit error rate, BER) of the 4R UE is lower than that of the 1R UE, and a range in which data can be normally transmitted is larger than that of the 1R UE. If the 1R UE wants to have a same BER as the 4R UE, the RSRP value measured by the 1R UE needs to be larger. In other words, the 1R LTE needs to be closer to the base station. As shown in FIG. 1, a coverage range (namely, a range in which the 4R UE can normally transmit data) of the 4R UE (UE 1 in FIG. 1) is shown by larger dashed circles, and a coverage range of the 1R UE (UE 2 in FIG. 1) is shown by smaller solid circles. An area between two solid circles (or outside the two solid circles) in FIG. 1 is a coverage gap between the base station and the 1R UE. However, in FIG. 1, because two dashed circles have an overlapping area, for the 4R UE in FIG. 1, it may be considered that there is no coverage gap, or it may be considered that a coverage gap is small. A coverage gap between a base station and UE may be understood as that when the UE is in the coverage gap, the UE is not in coverage of any base station. The 1R UE in FIG. 1 is currently in the coverage gap, and the 1R LTE may not be able to normally receive data from a serving cell. For the 4R UE, the dashed circles are the coverage range of the 4R UE, and the 4R UE can receive data from a serving cell at a current location.

The coverage gap of the redcap LTE may cause some problems during cell reselection. The following provides examples.

Problem 1: As shown in FIG. 2, for example, the redcap LTE (LTE in FIG. 2) performs cell reselection based on an RSRP threshold of the legacy UE. However, the RSRP value measured by the redcap UE may be small and cannot meet the RSRP threshold of the legacy UE. Therefore, the redcap UE cannot reselect to a neighbor cell (neighbor cell, NC). The neighbor cell is also referred to as a neighboring cell below. In addition, because the redcap UE is located in a coverage gap (between or outside two solid circles), that is, the redcap UE is not located in a range (indicated by a solid circle) in which the redcap LTE can normally receive data, the redcap LTE cannot normally receive data from a serving cell. As a result, the redcap UE cannot normally work. Especially, if the serving cell does not support coverage enhancement but the neighbor cell supports coverage enhancement, it is a better choice for the redcap UE to reselect to the neighbor cell. However, the redcap UE cannot reselect to the neighbor cell due to the RSRP.

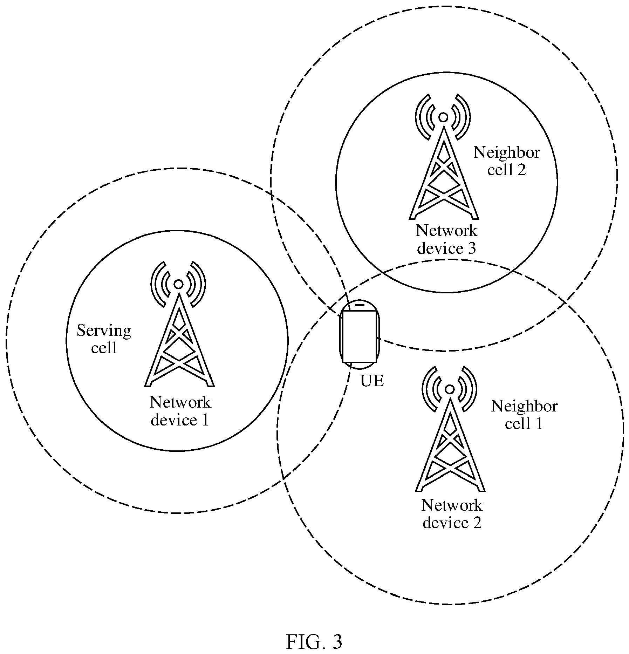

Problem 2: As shown in FIG. 3, for example, the redcap LTE performs cell reselection based on an RSRP threshold of the legacy UE. If a neighbor cell 1 and a neighbor cell 2 have a same priority, the redcap UE sorts measured RSRP values of both cells and reselects to a cell with a larger RSRP value. For example, if the neighbor cell 2 supports coverage enhancement but the neighbor cell 1 does not support coverage enhancement, it is ideal for the redcap LTE to reselect to the neighbor cell 2. However, an RSRP value measured by the redcap UE for the neighbor cell 1 may be greater than an RSRP value measured by the redcap UE for the neighbor cell 2. Therefore, the redcap UE may reselect to the neighbor cell 1 but cannot reselect to the neighbor cell 2.

It can be learned from the problems that when the redcap LTE performs cell reselection, a probability of reselection to a cell that supports coverage enhancement is low.

In view of this, the technical solutions in embodiments of this application are provided. In embodiments of this application, during cell reselection, if UE needs to determine whether a first cell can be reselected to, the LTE may determine whether the first cell meets a first condition. If the first condition is met, the first cell may be selected. The first condition relates to a first value, and the first value is, for example, related to a quality threshold of a neighbor cell during cell reselection. In addition, the first value is further related to a coverage enhancement gain of the first cell. In other words, a relationship is established between a determining condition of the UE and a coverage enhancement support status of a cell. Impact of coverage enhancement on cell reselection is considered. In this manner, the UE can more easily reselect to a cell that supports coverage enhancement, thereby improving communication quality of the UE.

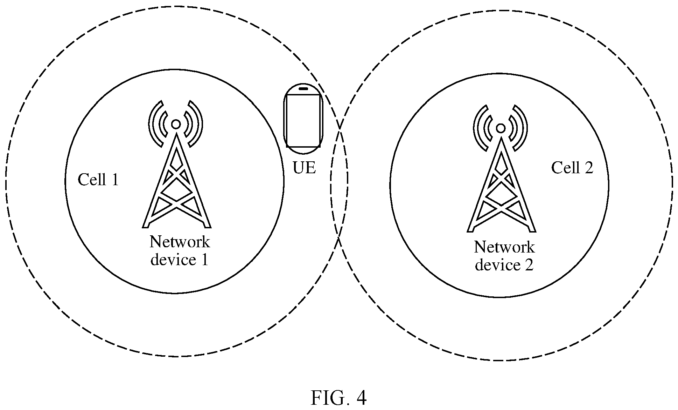

FIG. 4 is a schematic diagram of an application scenario according to an embodiment of this application. In FIG. 4, UE can communicate with a network device 1, and a cell 1 provided by the network device 1 is a serving cell of the UE. A cell 2 provided by a network device 2 is a neighbor cell of the UE, and when the UE performs cell reselection, the cell 2 may be used as a candidate cell. In FIG. 4, the cell 1 and the cell 2 are cells provided by different network devices. Alternatively, the cell 1 and the cell 2 may be cells provided by a same network device. In other words, FIG. 4 is merely an example.

The network device in FIG. 4 is, for example, an access network device, and the access network device is, for example, a base station. The access network device corresponds to different devices in different systems. For example, the access network device may correspond to an eNB in a 4G system, and corresponds to an access network device in 5G in a 5G system, for example, a gNB. Certainly, the technical solutions provided in embodiments of this application may also be applied to a future mobile communication system. Therefore, the access network device in FIG. 4 may also correspond to a network device in the future mobile communication system. In embodiments of this application, an example in which the access network device is a base station is used. Actually, with reference to the foregoing descriptions, the access network device may alternatively be a device such as an RSU.

The following describes the method provided in embodiments of this application with reference to the accompanying drawings. In the accompanying drawings corresponding to embodiments of this application, all optional steps are represented by dashed lines. UE described in embodiments of this application is, for example, redcap UE, or may be legacy UE. The technical solutions described in embodiments of this application can be applied to the network architecture shown in FIG. 4. For example, the UE described in embodiments of this application is, for example, the UE in the network architecture shown in FIG. 4. A serving cell of the UE described in embodiments of this application is, for example, the cell 1 in the network architecture shown in FIG. 4. A first cell, a second cell, or a third cell described in embodiments of this application is, for example, the cell 2 in the network architecture shown in FIG. 4. A network device described in embodiments of this application is, for example, the network device 1 in the network architecture shown in FIG. 4.

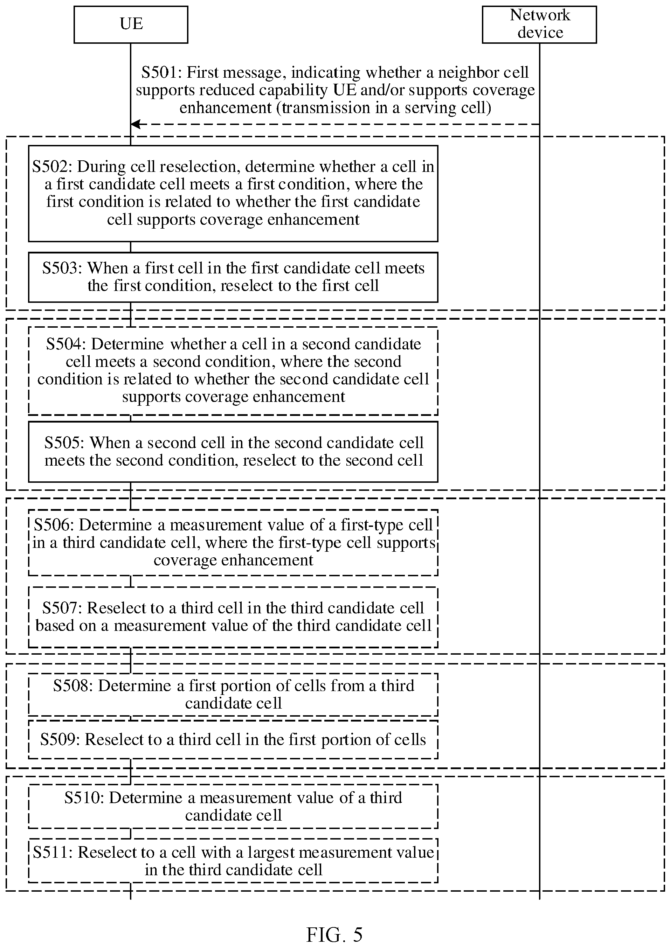

An embodiment of this application provides a cell reselection method. FIG. 5 is a flowchart of the method.

S501: A network device sends a first message in a serving cell of LTE, and correspondingly, the UE receives the first message from the network device. The first message may indicate whether a neighbor cell supports redcap UE, and the UE can determine, based on the first message, whether the neighbor cell supports the redcap UE. Alternatively, the first message may indicate whether a neighbor cell supports coverage enhancement, and the UE can determine, based on the first message, whether the neighbor cell supports coverage enhancement. Alternatively, the first message may indicate whether a neighbor cell supports redcap UE and whether the neighbor cell supports coverage enhancement, and the UE can determine, based on the first message, whether the neighbor cell supports the redcap UE and whether the neighbor cell supports coverage enhancement. There may be one or more neighbor cells of the serving cell. The first message may indicate one neighbor cell, or may indicate a plurality of neighbor cells. If a plurality of neighbor cells are indicated, the first message may indicate whether each neighbor cell supports the redcap UE and/or supports coverage enhancement. Because the first message may indicate each neighbor cell in a similar manner, an example in which the first message indicates one neighbor cell is used for description in this embodiment of this application.

The first message is, for example, a system message, for example, a system information block (system information block, SIB). Alternatively, the first message may be another message, for example, another broadcast message or a unicast message.

The first message may indicate whether the neighbor cell supports the redcap UE in a plurality of indication manners, and the following uses examples for description.

1. Explicit indication manner

The first message may include first indication information, and the first indication information may indicate that the neighbor cell supports the redcap UE, or indicate that the neighbor cell does not support the redcap LTE. For example, the first indication information occupies 1 bit (bit). A value of the bit being "1" indicates that the neighbor cell supports the redcap UE. A value of the bit being "0" indicates that the neighbor cell does not support the redcap UE.

Alternatively, if the first message includes first indication information, the first message indicates that the neighbor cell supports the redcap LTE; or if the first message does not include first indication information, the first message indicates that the neighbor cell does not support the redcap UE. The first indication information may occupy one or more bits.

If the first message needs to indicate whether a plurality of neighbor cells support the redcap LTE, the first message may be indicated by using a plurality of pieces of first indication information, and one piece of first indication information indicates one neighbor cell. For example, the plurality of pieces of first indication information may be implemented by using a bitmap (bitmap). A quantity of bits included in the bitmap is equal to a quantity of neighbor cells that need to be indicated, and one bit of the bitmap indicates one neighbor cell. Alternatively, one of the plurality of pieces of first indication information may include an identifier of a neighbor cell indicated by the first indication information (for example, an ID or a serial number of the neighbor cell), and include information indicating whether the neighbor cell supports the redcap UE. Alternatively, there may be another implementation of the plurality of pieces of first indication information. Details are not described again.

In another possibility, the first message does not indicate, by using the first indication information, whether the neighbor cell supports the redcap UE, but indicates, by using a fifth parameter, whether the neighbor cell supports the redcap UE. The fifth parameter may indicate whether the cell supports the redcap UE. For example, the fifth parameter is represented as $offset_{n,r}$, where n represents an identifier of a cell, for example, a number or an ID of the cell, and r represents redcap. For example, for a cell, if the cell does not support the redcap, a value of $offset_{n,r}$ of the cell is "0"; or if the cell supports the redcap, a value of $offset_{n,r}$ of the cell is "1". In this manner, whether the cell supports the redcap can be simply distinguished.

For example, if the first message includes a fifth parameter of a neighbor cell, the first message indicates that the neighbor cell supports the redcap LTE; or if the first message does not include a fifth parameter of a neighbor cell, the first message indicates that the neighbor cell does not support the redcap UE.

For another example, if a value of a fifth parameter of a neighbor cell included in the first message is not a first specified value, the first message indicates that the neighbor cell supports the redcap UE; or if a value of a fifth parameter of a neighbor cell included in the first message is a first specified value, the first message indicates that the neighbor cell does not support the redcap UE. The first specified value is, for example, 0, or may be another value. The first specified value is, for example, configured by the network device, or specified in a protocol.

Whether the neighbor cell supports the redcap LTE is indicated in the explicit indication manner, so that an indication is clear.

If the first message indicates, by using the first indication information, whether the neighbor cell supports the redcap UE, or indicates, in an implicit indication manner, whether the neighbor cell supports the redcap UE, it is equivalent that the serving cell does not send the value of the fifth parameter of the neighbor cell. In this case, it may be considered that the neighbor cell also corresponds to the fifth parameter. For cells that support the redcap LTE, values of fifth parameters are the same. For example, the values are specified in a protocol, or are configured by the network device. For cells that do not support coverage enhancement, values of fifth parameters are, for example, 0. If the LTE needs to use the value of the fifth parameter of the neighbor cell (for example, the value of the fifth parameter of the neighbor cell needs to be used in a cell reselection process described below), the LTE may determine the value of the fifth parameter of the neighbor cell in the foregoing manner. Alternatively, the indication manner may also be applied in combination. For example, the first message may indicate, by using the first indication information, whether the neighbor cell supports the redcap UE, or indicate, in the implicit indication manner, whether the neighbor cell supports the redcap UE. If the neighbor cell supports the redcap UE, the first message may further include the value of the fifth parameter of the neighbor cell. In this manner, indication content is more comprehensive. However, if the first message does not indicate whether the neighbor cell supports the redcap LTE, the LTE may not consider the fifth parameter of the cell in the cell reselection process.

2. Implicit indication manner

The first message may implicitly indicate, by using some other information included in the first message, whether the neighbor cell supports the redcap UE.

For example, if the first message indicates that the neighbor cell supports coverage enhancement, the first message implicitly indicates that the neighbor cell supports the redcap UE; or if the first message indicates that the neighbor cell does not support coverage enhancement, the first message implicitly indicates that the neighbor cell does not support the redcap UE.

For another example, if the first message indicates that the neighbor cell configures a random access channel (random access channel, RACH) resource for the redcap UE, the first message implicitly indicates that the neighbor cell supports the redcap UE; or if the first message indicates that the neighbor cell does not configure an RACH resource for the redcap UE, the first message implicitly indicates that the neighbor cell does not support the redcap UE.

For another example, if the first message indicates that the neighbor cell configures an initial uplink bandwidth part (initial uplink bandwidth part, initial UL BWP) for the redcap UE, the first message implicitly indicates that the neighbor cell supports the redcap UE; or if the first message indicates that the neighbor cell does not configure an initial UL BWP for the redcap UE, the first message implicitly indicates that the neighbor cell does not support the redcap UE.

The several indication manners may be separately applied, or any two or three of the indication manners may be combined for application. For example, in a combination manner, if the first message indicates that the neighbor cell configures an initial UL BWP for the redcap UE, and indicates that the neighbor cell configures a RACH resource for the redcap UE, the first message implicitly indicates that the neighbor cell supports the redcap UE; or if the first message indicates that the neighbor cell does not configure an initial LTL BWP for the redcap LTE and/or does not configure a RACH resource for the redcap UE, the first message implicitly indicates that the neighbor cell does not support the redcap UE.

Whether the neighbor cell supports the redcap LTE is indicated in the implicit indication manner, so that an indication can be completed without adding additional information to the first message. This can reduce signaling overheads, and can reduce modification of a format of the first message, so that the technical solution in embodiments of this application can be better compatible with an existing protocol.

Similarly, the first message may also indicate whether the neighbor cell supports coverage enhancement in a plurality of indication manners.

For example, in an indication manner, the first message includes second indication information corresponding to the neighbor cell, and the second indication information may indicate that the neighbor cell supports coverage enhancement, or indicate that the neighbor cell does not support coverage enhancement. For example, the second indication information occupies 1 bit. A value of the bit being " 1" indicates that the neighbor cell indicated by the second indication information supports coverage enhancement. A value of the bit being "0" indicates that the neighbor cell indicated by the second indication information does not support coverage enhancement.

For another example, in another indication manner, if the first message includes second indication information corresponding to the neighbor cell, the first message indicates that the neighbor cell supports coverage enhancement;

or if the first message does not include second indication information corresponding to the neighbor cell, the first message indicates that the neighbor cell does not support coverage enhancement.

Whether the neighbor cell supports coverage enhancement is indicated by using the second indication information, so that an indication manner is simple.

Alternatively, the first message may indicate, by using a second parameter, whether the neighbor cell supports coverage enhancement.

For example, in an indication manner, if the first message includes a value of the second parameter of the neighbor cell, the first message indicates that the neighbor cell supports coverage enhancement; or if the first message does not include a value of the second parameter of the neighbor cell, the first message indicates that the neighbor cell does not support coverage enhancement.

For another example, in another indication manner, if a value of the second parameter of the neighbor cell included in the first message is not equal to 0, the first message indicates that the neighbor cell supports coverage enhancement; or if a value of the second parameter of the neighbor cell included in the first message is equal to 0, the first message indicates that the neighbor cell does not support coverage enhancement. The second parameter is a parameter related to a coverage enhancement gain of the neighbor cell. For example, a larger coverage enhancement gain of the neighbor cell indicates a larger value of the second parameter of the neighbor cell. For example, when the neighbor cell does not support coverage enhancement, the value of the second parameter of the neighbor cell is 0. As the coverage enhancement gain of the neighbor cell increases, the value of the second parameter of the neighbor cell also increases. The second parameter is, for example, represented as $offset_n$, where n may represent an identifier of the neighbor cell, for example, an ID of the neighbor cell or a number of the neighbor cell.

If the first message indicates, by using the second indication information, whether the neighbor cell supports coverage enhancement, it is equivalent that the serving cell does not send the value of the second parameter of the neighbor cell. In this case, it may be considered that the neighbor cell also corresponds to the second parameter. For cells that support coverage enhancement, values of second parameters are the same. For example, the values are specified in a protocol, or are configured by the network device. For cells that do not support coverage enhancement, values of second parameters are, for example, 0. If the LTE needs to use the value of the second parameter of the neighbor cell (for example, the value of the second parameter of the neighbor cell needs to be used in a cell reselection process described below), the UE may determine the value of the second parameter of the neighbor cell in the foregoing manner. Alternatively, the indication manner may also be applied in combination. For example, the first message may indicate, by using the second indication information, whether the neighbor cell supports coverage enhancement. If the neighbor cell supports coverage enhancement, the first message may further include the value of the second parameter of the neighbor cell. In this manner, indication content is more comprehensive. However, if the first message does not indicate whether the neighbor cell supports coverage enhancement, the UE may not consider the second parameter of the cell in the cell reselection process.

In this embodiment of this application, the serving cell may indicate a status of the neighbor cell, for example, indicate whether the neighbor cell supports the redcap UE. Therefore, during cell reselection, the redcap LTE may select the neighbor cell, to minimize a probability of selecting a cell that does not support the redcap UE. For example, the serving cell may also indicate whether the neighbor cell supports coverage enhancement. In this case, regardless of whether the redcap UE or legacy UE performs cell reselection, a coverage enhancement support status of the neighbor cell may be learned in advance. For example, the redcap UE may reselect, as much as possible, to a cell that supports coverage enhancement, to improve communication quality of the redcap UE.

Optionally, the neighbor cell may also indicate, by using a similar method, whether the neighbor cell supports the redcap UE and/or supports coverage enhancement. For example, the neighbor cell may also send a message, where the message indicates whether the neighbor cell supports the redcap UE and/or supports coverage enhancement. In this case, the UE needs to read the message of the neighbor cell.

Alternatively, the serving cell may not perform S501. Therefore, S501 is an optional step.

S502: During cell reselection, the UE determines whether a cell in a first candidate cell meets a first condition. The UE may perform cell reselection when the UE camps on the serving cell for more than or equal to 1s. When the UE performs cell reselection, a candidate cell may include one or more cells. For example, the candidate cell may include at least one neighbor cell of the serving cell of the UE, and may further include the serving cell. In other words, the serving cell may also be used as a candidate cell.

When the UE performs cell reselection, there may be different cases for the candidate cell. For example, the candidate cell may include one or more of the following cells: a cell on a high-priority frequency, a cell on a low-priority frequency, a cell on a same frequency as the serving cell, or a cell on a different frequency from the serving cell and having a same priority as the serving cell. For these cells, the UE may preferentially determine whether the cell on the high-priority frequency can be reselected to. If the cell on the high-priority frequency can be reselected to, the LTE reselects to the cell on the high-priority frequency without determining whether to reselect to another cell. If the cell on the high-priority frequency cannot be reselected to, the UE may determine whether the cell on the same frequency as the serving cell can be reselected to, or determine whether the cell on the different frequency from the serving cell and having the same priority as the serving cell can be reselected to. If both the cell on the same frequency as the serving cell and the cell on the different frequency from the serving cell and having the same priority as the serving cell cannot be reselected to, the UE may determine whether the cell on the lower-priority frequency can be reselected to. Alternatively, if the cell on the high-priority frequency cannot be reselected to, the UE may determine whether the cell on the low-priority frequency can be reselected to. If the cell on the low-priority frequency cannot be reselected to, the UE may determine whether the cell on the same frequency as the serving cell can be reselected to, or determine whether the cell on the different frequency from the serving cell and having the same priority as the serving cell can be reselected to.

Optionally, the first candidate cell includes, for example, a cell on a high-priority frequency in all candidate cells on which the UE performs cell reselection, and does not include another cell. For example, when the UE performs cell reselection, there are 10 candidate cells in total, where five are cells on high-priority frequencies, and the other five include one or more of the cell on the low-priority frequency, the cell on the same frequency as the serving cell, or the cell on the different frequency from the serving cell but having the same priority as the serving cell. In this case, the first candidate cell may refer to the five cells on the high-priority frequencies. In addition, optionally, if the UE receives the first message, and the first message indicates whether the neighbor cell supports the redcap UE, the first candidate cell may be a cell that supports the redcap UE. In other words, the UE may select a cell that supports the redcap UE as a candidate cell for cell reselection. If the first message does not indicate whether the neighbor cell supports the redcap UE, the first candidate cell may include a cell that supports the redcap UE and/or a cell that does not support the redcap UE. Alternatively, even if the first message indicates whether the neighbor cell supports the redcap LTE, the first candidate cell may also include a cell that supports the redcap UE and/or a cell that does not support the redcap UE. In other words, the LTE may not consider whether the first candidate cell supports the redcap UE when determining the first candidate cell.

The first condition is used to determine whether the cell on the high-priority frequency can be reselected to. For example, if a cell is a cell on a high-priority frequency, the UE determines, based on the first condition, whether the cell can be reselected to. If the cell meets the first condition, the LTE can reselect to the cell. If the cell does not meet the first condition, the LTE cannot reselect to the cell.

That a cell meets the first condition may include: In first duration, a value of a first parameter obtained by the LTE by measuring the cell is greater than a first value. In other words, the cell meets that the value of the first parameter is greater than the first value in the first duration. For example, the UE may perform one or more measurements on the cell in the first duration, and a value of the first parameter can be obtained in each measurement. In this case, that a cell meets the first condition may mean that a value of the first parameter obtained in each of a portion or all of measurements performed by the UE on the cell in the first duration is greater than the first value. Explanations of all content that mentions "first duration" in the following are similar. The first value is related to the value of the second parameter of the cell. Because the second parameter may indicate whether the cell supports coverage enhancement, it may be considered that the first condition is related to whether the neighbor cell (or the first candidate cell) supports coverage enhancement. The first duration is, for example, $Treselection_{RAT}$, or may be other duration defined in this embodiment of this application. The first parameter is, for example, reference signal received quality (reference signal received quality, RSRQ), or RSRP, or may be another parameter. When types of the first parameter are different, first values may also be correspondingly different. A cell may meet the first condition in different implementations. The following uses examples for description.

1. First implementation of the first condition

In addition to the value of the second parameter of the cell, the first value may be related to a first threshold or a second threshold. For example, if the first parameter is the RSRQ, the first value may be related to the first threshold; or if the first parameter is the RSRP, the first value may be related to the second threshold. The first threshold is a value threshold of RSRQ of the cell during cell reselection. For example, the first threshold is $Thresh_{X,HighQ}$, or may be another value defined in this embodiment of this application. The second threshold is a value threshold of RSRP of the cell during cell reselection. For example, the second threshold is $Thresh_{X,HighP}$, or may be another value defined in this embodiment of this application. For example, if the first value is related to the value of the second parameter of the cell and the first threshold, an implementation of the first value is that the first value is a difference between the first threshold and the value of the second parameter of the cell. If the first value is related to the value of the second parameter of the cell and the second threshold, an implementation of the first value is, for example, the first value is a difference between the second threshold and the value of the second parameter of the cell.

For example, a value of the RSRQ obtained by the UE through measurement on the cell is represented as $S_{qual}$, and a value of the RSRP obtained by the LTE through measurement on the cell is represented as $S_{rxlev}$. That a cell meets the first condition is that, for example, the cell meets the following Formula 1 or Formula 2:

$$S_{qual} > Thresh_{X,HighQ} - offset_n \text{ (in the first duration)} \qquad \text{(Formula 1)}$$

$$S_{rxlev} > Thresh_{X,HighP} - offset_n \text{ (in the first duration)} \qquad \text{(Formula 2)}$$

If the first parameter is the RSRQ, S= $Thresh_{X,HighQ}$ - $offset_n$; or if the first parameter is the RSRP, S=$Thresh_{X,HighP}$ - $offset_n$, where S represents the first value. For ease of use, $Thresh_{X,HighQ}$ may alternatively be represented by Q or another character, and $Thresh_{X,HighP}$ may alternatively be represented by P or another character.

$offset_n$ is the value of the second parameter of the cell. If a cell meets Formula 1 or Formula 2, it is considered that the cell meets the first condition, and the UE can reselect to the cell. If a cell does not meet both Formula 1 and Formula 2, it is considered that the cell does not meet the first condition, and the LTE cannot reselect to the cell. For example, for a neighbor cell of the serving cell, a larger coverage enhancement gain of the neighbor cell indicates a larger value of $offset_n$ of the neighbor cell. Therefore, when the UE performs determining according to the formulas, it is equivalent to that a corresponding threshold is used to subtract $offset_n$ with the large value. Therefore, $S_{qual}$ or $S_{rxlev}$ obtained by the UE through measurement may meet the formulas, so that the UE can reselect to the neighbor cell.

In the first implementation of the first condition, impact of coverage enhancement on cell reselection is considered, and an RSRP threshold of a cell that supports coverage enhancement is reduced by adding $offset_n$, so that the LTE more easily reselects to the cell that supports coverage enhancement.

2. Second implementation of the first condition

In the first implementation of the first condition, the coverage enhancement gain of the neighbor cell is considered. In this case, in the cell reselection process of the UE, the serving cell may also be used as a candidate cell, and the serving cell may also support coverage enhancement. If the serving cell supports coverage enhancement but the neighbor cell does not support coverage enhancement, the UE is expected to camp on the serving cell. Therefore, the second implementation of the first condition is proposed. A third parameter is introduced in the second implementation of the first condition, and the third parameter is a parameter related to a coverage enhancement gain of the serving cell of the UE. For example, the serving cell may indicate a value of the third parameter by using the first message, or may indicate a value of the third parameter to the UE in another manner. In the second implementation of the first condition, a larger coverage enhancement gain of the serving cell indicates a larger value of the third parameter. For example, when the serving cell does not support coverage enhancement, the value of the third parameter of the serving cell is 0. As the coverage enhancement gain of the serving cell increases, the value of the third parameter of the serving cell increases. For example, the third parameter is represented as $offset_s$, and s may represent an identifier of the serving cell, for example, an ID of the serving cell or a number of the neighbor cell, or s represents the serving cell. After the third parameter is introduced, the first condition may have the second implementation different from the foregoing implementation.

In this implementation, the first value may be related to the second parameter of the neighbor cell and the third parameter of the serving cell. In addition, if the first parameter is the RSRQ, the first value may be further related to a first threshold; or if the first parameter is the RSRP, the first value may be further related to a second threshold.

For example, a value of the RSRQ obtained by the UE through measurement on the cell is represented as $S_{qual}$, and a value of the RSRP obtained by the LTE through measurement on the cell is represented as $S_{rxlev}$. That a cell meets the first condition is that, for example, the cell meets the following Formula 3 or Formula 4:

$$S_{qual} > Thresh_{X,HighQ} + offset_s - offset_n \text{ (in the first duration)} \qquad \text{(Formula 3)}$$

$$S_{rxlev} > Thresh_{X,HighP} + offset_s - offset_n \text{ (in the first duration)} \qquad \text{(Formula 4)}$$

If the first parameter is the RSRQ, S=$Thresh_{X,HighQ}$ + $offset_s$ - $offset_n$; or if the first parameter is the RSRP, S=$Thresh_{X,HighP}$ + $offset_s$ - $offset_n$, where S represents the first value.

$offset_n$ is the value of the second parameter of the cell, and $offset_s$ is a value of the third parameter of the serving cell. If a cell meets Formula 3 or Formula 4, it is considered that the cell meets the first condition, and the LTE can reselect to the cell. If a cell does not meet both Formula 3 and Formula 4, it is considered that the cell does not meet the first condition, and the UE cannot reselect to the cell. For example, for a neighbor cell of the serving cell, a larger coverage enhancement gain of the neighbor cell indicates a larger value of $offset_n$ of the neighbor cell, and for the serving cell, a larger coverage enhancement gain of the serving cell indicates a larger value of $offset_s$ of the serving cell. For example, if the neighbor cell supports coverage enhancement, but the serving cell does not support coverage enhancement, the value of $offset_s$ is large, and the value of $offset_s$ is small. In this case, when the UE performs determining according to the formulas, it is equivalent to that a corresponding threshold is used to subtract $offset_n$ with the large value. In addition, although $offset_s$ needs to be added, the value of $offset_s$ is small. Therefore, $S_{qual}$ or $S_{rxlev}$ obtained by the UE through measurement may meet the formulas, so that the UE can reselect to the neighbor cell. For another example, if the neighbor cell does not support coverage enhancement, but the serving cell supports coverage enhancement, the value of $offset_n$ is small, for example, is 0, and the value of $offset_s$ is large. In this case, when the LTE performs determining according to the formulas, it is equivalent to that a corresponding threshold is used to add $offset_s$ with the large value. In addition, although the value of $offset_n$ needs to be subtracted, the value of $offset_n$ is small. Therefore, $S_{qual}$ or $S_{rxlev}$ obtained by the UE through measurement may not meet the formulas, and the UE continues to camp on the serving cell.

In the second implementation of the first condition, both impact of coverage enhancement of the neighbor cell on cell reselection and impact of coverage enhancement of the serving cell on cell reselection are considered, thereby minimizing a problem that the UE still reselects to a neighbor cell that is on a high-priority frequency and that does not support coverage enhancement when the serving cell supports coverage enhancement. In this manner, whether the serving cell supports coverage enhancement is considered, so that the UE can camp on a cell that supports coverage enhancement as much as possible.

3. Third implementation of the first condition

In addition to the value of the second parameter of the cell, the first value may be related to a value of a fifth parameter of the cell. In addition, the first value may be further related to a first threshold or a second threshold. For example, the first message indicates, by using the first indication information, whether the neighbor cell supports the redcap UE. In this case, if the neighbor cell supports the redcap UE, the UE may determine that the value of the fifth parameter of the neighbor cell is a second specified value; or if the neighbor cell does not support the redcap UE, the UE may determine that the value of the fifth parameter of the neighbor cell is a first specified value. The second specified value is, for example, configured by the network device, or specified in a protocol. The second specified value is, for example, 1, or may be another value. The first specified value is described above. For another example, if the first message indicates, by using the fifth parameter, whether the neighbor cell supports the redcap UE, the LTE can obtain the value of the fifth parameter of the neighbor cell based on the first message.

For example, if the first parameter is the RSRQ, the first value may be related to the value of the second parameter of the cell, the value of the fifth parameter of the cell, and the first threshold; or if the first parameter is the RSRP, the first value may be related to the value of the second parameter of the cell, the value of the fifth parameter of the cell, and the second threshold.

For example, a value of the RSRQ obtained by the UE through measurement on the cell is represented as $S_{qual}$, a value of the RSRP obtained by the UE through measurement on the cell is represented as $S_{rxlev}$, and the fifth parameter is represented as $offset_{n,r}$. That a cell meets the first condition is that, for example, the cell meets the following Formula 1 or Formula 2:

$$S_{qual} > Thresh_{X,HighQ} - offset_{n,r} - offset_n \quad \text{(in the first duration)} \quad \text{(Formula 5)}$$

$$S_{rxlev} > Thresh_{X,HighP} - offset_{n,r} - offset_n \quad \text{(in the first duration)} \quad \text{(Formula 6)}$$

If the first parameter is the RSRQ, S=$Thresh_{X,HighQ}$ - $offset_{n,r}$-$offset_n$; or if the first parameter is the RSRP, S=$Thresh_{X,HighP}$ - $offset_{n,r}$ - $offset_n$, where S represents the first value.

$offset_n$ is the value of the second parameter of the cell, and $offset_{n,r}$ is the value of the fifth parameter of the cell. If a cell meets Formula 5 or Formula 6, it is considered that the cell meets the first condition, and the UE can reselect to the cell. If a cell does not meet both Formula 5 and Formula 6, it is considered that the cell does not meet the first condition, and the UE cannot reselect to the cell. For example, for a neighbor cell of the serving cell, a larger coverage enhancement gain of the neighbor cell indicates a larger value of $offset_n$ of the neighbor cell, and if the neighbor cell supports the redcap LTE, a value of $offset_{n,r}$ of the neighbor cell is also larger (compared with a value obtained when the neighbor cell does not support the redcap UE). Therefore, when the LTE performs determining according to the formulas, it is equivalent to that a corresponding threshold is used to subtract a large value. Therefore, $S_{qual}$ or $S_{rxlev}$ obtained by the LTE through measurement may meet the formulas, so that the LTE can reselect to the neighbor cell.

In the third implementation of the first condition, impact of coverage enhancement on cell reselection is considered, and impact of whether the redcap UE is supported on cell reselection is also considered. RSRP thresholds of supporting coverage enhancement and supporting the redcap UE are reduced by adding $offset_n$ and $offset_{n,r}$ so that the UE more easily reselects to a cell that supports coverage enhancement and supports the redcap UE.

2. Fourth implementation of the first condition

In the fourth implementation of the first condition, a third parameter is introduced based on the third implementation of the first condition, and the third parameter is a parameter related to a coverage enhancement gain of the serving cell of the UE.

In this implementation, the first value may be related to the second parameter of the neighbor cell, a fifth parameter of the neighbor cell, and a third parameter of the serving cell. In addition, if the first parameter is the RSRQ, the first value may be further related to a first threshold; or if the first parameter is the RSRP, the first value may be further related to a second threshold.

For example, a value of the RSRQ obtained by the UE through measurement on the cell is represented as $S_{qual}$, a value of the RSRP obtained by the UE through measurement on the cell is represented as $S_{rxlev}$, and the fifth parameter is represented as $offset_{n,r}$. That a cell meets the first condition is that, for example, the cell meets the following Formula 3 or Formula 4:

$$S_{qual} > Thresh_{X,HighQ} + offset_s - offset_{n,r} - offset_n \quad \text{(in the first duration)}$$

(Formula 7)

$$S_{rxlev} > Thresh_{X,HighP} + offset_s - offset_{n,r} - offset_n \quad \text{(in the first duration)}$$

(Formula 8)

If the first parameter is the RSRQ, S=$Thresh_{X,HighQ}$ + $offset_s$ - $offset_{n,r}$-$offset_n$; or if the first parameter is the RSRP, S=$Thresh_{X,HighP}$ + $offset_s$ - $offset_{n,r}$ - $offset_n$, where S represents the first value.

$offset_n$ is the value of the second parameter of the cell, $offset_{n,r}$ is a value of the fifth parameter of the cell, and $offset_s$ is a value of the third parameter of the serving cell. If a cell meets Formula 7 or Formula 8, it is considered that the cell meets the first condition, and the UE can reselect to the cell. If a cell does not meet both Formula 7 and Formula 8, it is considered that the cell does not meet the first condition, and the UE cannot reselect to the cell. For example, for a neighbor cell of the serving cell, a larger coverage enhancement gain of the neighbor cell indicates a larger value of $offset_n$ of the neighbor cell, and for the serving cell, a larger coverage enhancement gain of the serving cell indicates a larger value of $offset_s$ of the serving cell. For example, if the neighbor cell supports coverage enhancement and supports the redcap UE, but the serving cell does not support coverage enhancement, the value of $offset_n$ is large, the value of $offset_s$ is small, and $offset_{n,r}$ may also be greater than 0. In this case, when the LTE performs determining according to the formulas, it is equivalent to that a corresponding threshold is used to subtract $offset_n$ with the large value. In addition, $offset_{n,r}$ is subtracted, and $offset_s$ is added. Although $offset_s$ is further added, the value of $offset_s$ is small. Therefore, $S_{qual}$ or $S_{rxlev}$ obtained by the UE through measurement may meet the formulas, so that the UE can reselect to the neighbor cell. For another example, if the neighbor cell does not support coverage enhancement and does not support the redcap UE, but the serving cell supports coverage enhancement, the value of $offset_n$ is small, for example, is 0, the value of $offset_{n,r}$ is also small, for example, is 0, and the value of $offset_s$ is large. In this case, when the LTE performs determining according to the formulas, it is equivalent to that a corresponding threshold is used to add $offset_s$ with the large value. In addition, $offset_{n,r}$ and $offset_n$ are further subtracted. Although $offset_{n,r}$ and $offset_n$ are subtracted, the values of $offset_{n,r}$ and $offset_n$ are small. Therefore, $S_{qual}$ or $S_{rxlev}$ obtained by the UE through measurement may not meet the formulas. Therefore, the UE continues to camp on the serving cell.

In the fourth implementation of the first condition, both impact of coverage enhancement of the neighbor cell on cell reselection and impact of coverage enhancement of the serving cell on cell reselection are considered, thereby minimizing a problem that the UE still reselects to a neighbor cell that is on a high-priority frequency and that does not support coverage enhancement when the serving cell supports coverage enhancement. In this manner, whether the serving cell supports coverage enhancement is considered, so that the UE can camp on a cell that supports coverage enhancement as much as possible. In addition, in this implementation, impact of whether the cell supports the redcap UE on cell reselection is further considered. In this implementation, the UE can camp on a cell that supports the redcap UE and supports coverage enhancement as much as possible.

If the third implementation or the fourth implementation of the first condition is used, the first candidate cell may not be required to support the redcap UE, because impact of whether the redcap UE is supported on cell reselection can be reflected in a determining process of the first condition. If the first implementation or the second implementation of the first condition is used, the first candidate cell may be a cell that supports the redcap UE, or whether the first candidate cell supports the redcap UE may not be limited.

If the first message indicates whether the neighbor cell supports coverage enhancement and indicates whether the neighbor cell supports the redcap LTE, any one of the first implementation, the second implementation, the third implementation, or the fourth implementation of the first condition may be considered for use. Alternatively, if the first message indicates whether the neighbor cell supports coverage enhancement but does not indicate whether the neighbor cell supports the redcap UE, the first implementation or the second implementation of the first condition may be considered for use. Alternatively, if the first message does not indicate whether the neighbor cell supports coverage enhancement but indicates whether the neighbor cell supports the redcap UE, the first candidate cell determined by the UE may be a cell that supports the redcap UE, and then the UE selects a cell from the first candidate cell in an existing manner.

S503: When a first cell in the first candidate cell meets the first condition, the UE reselects to the first cell.

For example, the first cell is one of the first candidate cells, and the UE may determine the first cell based on one of the implementations of the first condition. If the first cell meets the first condition, the UE may reselect to the first cell.

If no first candidate cell meets the first condition, the UE may perform selection in the cell on the low-priority frequency, or may perform selection in the cell on the same frequency or the same priority (as the serving cell of the LTE), and the LTE performs a subsequent step accordingly. Subsequent steps and S503 are parallel solutions, and the LTE selects to perform a corresponding solution based on a situation in which the candidate cell meets the first condition. Therefore, S504 to S511 to be described subsequently are all considered as optional steps. S504 and S505 that are to be described below are manners in which the LTE performs selection in the cell on the low-priority frequency, and S506 to S511 are manners in which the UE performs selection in the cell on the same frequency or having the same priority. S504 and S505, S506 and S507, S508 and S509, and S510 and S511 are four parallel solutions (where several large dashed boxes in FIG. 5 represent the solutions, and in FIG. 5, S502 and S503 are also placed in a dashed box as a solution). If no candidate cell meets the first condition, the LTE may perform one of the four parallel solutions. Alternatively, S506 and S507, S508 and S509, and S510 and S511 are three parallel solutions. If no first candidate cell meets the first condition, the UE performs S504 and S505. If no second candidate cell meets a second condition to be described below, the UE performs one of the three parallel solutions.

S504: The UE determines whether a cell in a second candidate cell meets the second condition.

If no first candidate cell meets the first condition, the UE may further determine whether a cell in the second candidate cell meets the second condition. Alternatively, if no first candidate cell meets the first condition, and no third candidate cell can be reselected to, the UE may determine whether a cell in the second candidate cell meets the second condition. The third candidate cell is described below.

Optionally, the second candidate cell includes, for example, a cell on a low-priority frequency in all candidate cells on which the UE performs cell reselection, and does not include another cell. For example, when the UE performs cell reselection, there are 10 candidate cells in total, where five are cells on high-priority frequencies, two of the other five are cells on low-priority frequencies, and the remaining three include cells on the same frequency as the serving cell and/or cells that are on a different frequency from the serving cell but have the same priority as the serving cell. In this case, the second candidate cell may refer to the two cells on the low-priority frequencies. The second candidate cell includes one or more cells. In addition, optionally, if the UE receives the first message, and the first message indicates whether the neighbor cell supports the redcap UE, the second candidate cell may be a cell that supports the redcap UE. In other words, the UE may select a cell that supports the redcap UE as a candidate cell for cell reselection. If the first message does not indicate whether the neighbor cell supports the redcap UE, the second candidate cell may include a cell that supports the redcap UE and/or a cell that does not support the redcap UE. Alternatively, even if the first message indicates whether the neighbor cell supports the redcap UE, the second candidate cell may also include a cell that supports the redcap UE and/or a cell that does not support the redcap UE. In other words, the UE may not consider whether the second candidate cell supports the redcap UE when determining the second candidate cell.

The second condition is used to determine whether the cell on the low-priority frequency can be reselected to. For example, if a cell is a cell on a low-priority frequency, the UE determines, based on the second condition, whether the cell can be reselected to. If the cell meets the second condition, the UE can reselect to the cell. If the cell does not meet the second condition, the UE cannot reselect to the cell.

That a cell meets the second condition may include: A value of the first parameter obtained by the UE by measuring the serving cell in the first duration is less than a second value, and a value of a first parameter obtained by the LTE by measuring the cell in the first duration is greater than a third value. Alternatively, that a cell meets the second condition may include: The serving cell of the UE meets that a value of the first parameter is less than a second value in the first duration, and the cell meets that a value of a first parameter is greater than a third value in the first duration. The second value is related to the third parameter of the serving cell, and the third value is related to the second parameter of the cell. Because the second parameter may indicate whether the to-be-reselected cell supports coverage enhancement, and the third parameter may indicate whether the serving cell supports coverage enhancement, it may be considered that the second condition is related to whether the serving cell and the neighbor cell (or the second candidate cell) support coverage enhancement.

In addition to the value of the third parameter of the serving cell, the second value may be related to a third threshold or a fourth threshold. For example, if the first parameter is the RSRQ, the second value is further related to the third threshold; or if the first parameter is the RSRP, the second value is further related to the fourth threshold. The third threshold is a value threshold of RSRQ of the serving cell during cell reselection. For example, the third threshold is $Thresh_{Serving,LowQ}$, or may be another value defined in this embodiment of this application. The fourth threshold is a value threshold of RSRP of the serving cell during cell reselection. For example, the fourth threshold is $Thresh_{Serving,LowP}$, or may be another value defined in this embodiment of this application. For example, if the second value is related to the value of the fourth parameter of the serving cell and the third threshold, an implementation of the second value is that the second value is a sum of the third threshold and the value of the third parameter of the serving cell. For another example, if the second value is related to the value of the fourth parameter of the serving cell and the fourth threshold, an implementation of the second value is that, for example, the second value is a sum of the fourth threshold and the value of the third parameter of the serving cell.

In addition to the value of the second parameter of the cell, the third value may also be related to a fifth threshold or a sixth threshold. For example, if the first parameter is the RSRQ, the third value is further related to the fifth threshold; or if the first parameter is the RSRP, the third value is further related to the sixth threshold. The fifth threshold is a value threshold of RSRQ of the cell during cell reselection. For example, the fifth threshold is $Thresh_{X,LowQ}$, or may be another value defined in this embodiment of this application. The sixth threshold is a value threshold of RSRP of the cell during cell reselection. For example, the sixth threshold is $Thresh_{X,LowP}$, or may be another value defined in this embodiment of this application. For example, if the third value is related to the value of the second parameter of the cell and the fifth threshold, an implementation of the third value is that the third value is a difference between the fifth threshold and the value of the second parameter of the cell. For another example, if the third value is related to the value of the second parameter of the cell and the sixth threshold, an implementation of the third value is that the third value is a difference between the sixth threshold and the value of the second parameter of the cell.

For example, a value of the RSRQ obtained by the UE through measurement on the cell is represented as $S_{qual}$, and a value of the RSRP obtained by the LTE through measurement on the cell is represented as $S_{rxlev}$. That a cell meets the second condition is that, for example, the cell meets the following Formula 9 or Formula 10, or meets Formula 11 and Formula 12:

$$S_{qual} < Thresh_{Serving,LowQ} + offset_s \text{ (in the first duration)} \quad \text{(Formula 9)}$$

$$S_{qual} > Thresh_{X,LowQ} - offset_n \text{ (in the first duration)} \quad \text{(Formula 10)}$$

$$S_{rxlev} < Thresh_{Serving,LowP} + offset_s \text{ (in the first duration)} \quad \text{(Formula 11)}$$

$$S_{rxlev} > Thresh_{X,LowP} - offset_n \text{ (in the first duration)} \quad \text{(Formula 12)}$$

If a cell meets Formula 9 and Formula 10, it is considered that the cell meets the second condition, and the LTE can reselect to the cell. Alternatively, if a cell meets Formula 11 and Formula 12, it may also be considered that the cell meets the second condition, and the LTE can reselect to the cell. If a cell does not meet Formula 9 and/or Formula 10, and does not meet Formula 11 and/or Formula 12, it is considered that the cell does not meet the second condition, and the LTE cannot reselect to the cell.

In a process of determining the second condition, for example, for a neighbor cell of the serving cell, a larger coverage enhancement gain of the neighbor cell indicates a larger value of $offset_n$ of the neighbor cell, and for the serving cell, a larger coverage enhancement gain of the serving cell indicates a smaller value of $offset_s$ of the serving cell. For example, if the neighbor cell supports coverage enhancement, but the serving cell does not support coverage enhancement, the value of $offset_n$ is large, and the value of $offset_s$ is large. For example, when the LTE performs determining according to Formula 5 and Formula 6, it is equivalent to that a corresponding threshold is used to subtract $offset_n$ with the large value in Formula 6, and is equivalent to that a corresponding threshold is also used to add $offset_s$ with the large value in Formula 5. Therefore, $S_{qual}$ obtained by the LTE through measurement may meet Formula 5 and Formula 6. Therefore, the LTE can reselect to the neighbor cell. For another example, if the neighbor cell does not support coverage enhancement, but the serving cell supports coverage enhancement, the value of $offset_n$ is small, for example, is 0, and the value of $offset_s$ is also small, for example, is 0. In this case, it is equivalent that the LTE still performs determining based on an original threshold. Because the original threshold may be large, $S_{qual}$ or $S_{rxlev}$ obtained by the UE through measurement may not meet the formulas, the UE continues to camp on the serving cell.

In this implementation of the second condition, impact of coverage enhancement on cell reselection is considered. In the serving cell, $offset_s$ that is opposite to a change rule of the coverage enhancement gain is added to make it more difficult for the UE to leave the serving cell that supports coverage enhancement. In the neighbor cell, $offset_n$ that is in direct proportion to a change rule of the coverage enhancement gain is subtracted to make it easier for the LTE to reselect to the neighbor cell that supports coverage enhancement. In conclusion, in this manner, the LTE can camp on a cell that supports coverage enhancement as much as possible, so as to improve communication quality of the UE.

Optionally, if the first message indicates whether the neighbor cell supports the redcap LTE, the second condition may further be correspondingly changed. For example, in Formula 9 and/or Formula 11, $offset_s$ may be replaced with ($offset_s$+$offset_{n,r}$), and in Formula 10 and/or Formula 12, $offset_n$ may be replaced with ($offset_n$+$offset_{n,r}$), where $offset_{n,r}$ indicates the value of the fifth parameter of the cell. In this manner, both impact of coverage enhancement on cell reselection and impact of whether the redcap UE is supported on cell reselection are considered, so that the UE more easily reselects to a cell that supports coverage enhancement and supports the redcap LTE. If this implementation is used for the second condition, the second candidate cell may not be required to support the redcap UE, because impact of whether the redcap UE is supported on cell reselection can be reflected in the determining process of the second condition.

If the first message indicates whether the neighbor cell supports coverage enhancement, the UE may select a cell based on the second condition regardless of whether the first message indicates whether the redcap UE is supported. Alternatively, if the first message does not indicate whether the neighbor cell supports coverage enhancement but indicates whether the neighbor cell supports the redcap LTE, the second candidate cell determined by the LTE may be a cell that supports the redcap UE, and then the UE selects a cell from the second candidate cell in an existing manner.

S505: When a second cell in the second candidate cell meets the second condition, the UE reselects to the second cell.

For example, the second cell is one of the second candidate cells, and the UE may determine the second cell based on the second condition. If the second cell meets the second condition, the UE may reselect to the second cell, and the cell reselection process ends.

If no second candidate cell meets the first condition, the LTE may perform selection in the cell on the same frequency or the same priority (as the serving cell of the UE), and the UE performs a subsequent step accordingly. Alternatively, if no second candidate cell meets the first condition, the UE may end the cell reselection process.

S506: The UE determines a measurement value of a first-type cell in the third candidate cell.

If no first candidate cell meets the first condition, the UE may determine the measurement value of the first-type cell. Alternatively, if no first candidate cell meets the first condition, and no second candidate cell meets the second condition, the UE may determine the measurement value of the first-type cell in the third candidate cell.

Optionally, the third candidate cell includes, for example, a cell on the same frequency as the serving cell and/or a cell on a different frequency from the serving cell but having the same priority as the serving cell in all candidate cells on which the UE performs cell reselection, and does not include another cell. For example, when the UE performs cell reselection, there are 10 candidate cells in total, where five are cells on high-priority frequencies, two of the other five are cells on low-priority frequencies, and the remaining three include cells on the same frequency as the serving cell and/or cells that are on a different frequency from the serving cell but have the same priority as the serving cell. In this case, the third candidate cell may refer to the remaining third cells.

In addition, optionally, if the UE receives the first message, and the first message indicates whether the neighbor cell supports the redcap UE, the third candidate cell may be a cell that supports the redcap UE. In other words, the UE may select a cell that supports the redcap UE as a candidate cell for cell reselection. If the first message does not indicate whether the neighbor cell supports the redcap UE, the third candidate cell may include a cell that supports the redcap UE and/or a cell that does not support the redcap UE. Alternatively, even if the first message indicates whether the neighbor cell supports the redcap LTE, the third candidate cell may also include a cell that supports the redcap UE and/or a cell that does not support the redcap UE. In other words, the UE may not consider whether the third candidate cell supports the redcap UE when determining the third candidate cell.

The third candidate cell includes one or more cells, and the third candidate cell may include the first-type cell and a second-type cell. For example, a quantity of cells included in the first-type cell is greater than or equal to 0, and is less than or equal to a total quantity of cells included in the third candidate cell. For example, the first message indicates whether the neighbor cell supports coverage enhancement, so that the UE may determine the first-type cell from the third candidate cell, where the first-type cell includes, for example, a cell that supports coverage enhancement. A measurement value of a cell in the first-type cell may be determined based on a value of a second parameter obtained by the LTE by measuring the cell and a value of a third parameter of the cell. The "measurement value" is merely a name, and the feature may alternatively have another name, for example, may also be referred to as a "sorting value". It should be understood that, although the value is referred to as the "measurement value", the value is not necessarily obtained through direct measurement. For example, a measurement value of a cell may be obtained through direct measurement by the UE, or may be obtained after the LTE performs a corresponding change on a value obtained through measurement. For example, the measurement value of the cell in the first-type cell may be equal to a sum of a value of a first parameter obtained by the UE by measuring the cell and the value of the second parameter of the cell. For example, the first parameter is the RSRP or the RSRQ. For example, if R represents the measurement value of the cell in the first-type cell, R' represents the value of the first parameter obtained by the UE by measuring the cell, and $offset_n$ represents the value of the second parameter of the cell, the measurement value of the cell may meet the following relationship:

$$R = R' + offset_n \qquad \text{(Formula 13)}$$

The third candidate cell may further include the second-type cell, and the second-type cell is a cell that does not support coverage enhancement. For example, a quantity of cells included in the second-type cell is greater than or equal to 0, and is less than or equal to the total quantity of cells included in the third candidate cell. The UE also needs to determine a measurement value of the second-type cell. For example, a measurement value of a cell in the second-type cell may be determined based on a value of a first parameter obtained by the LTE by measuring the cell. For example, if R represents the measurement value of the cell in the second-type cell, and R' represents the value of the first parameter obtained by the UE by measuring the cell, the measurement value of the cell may meet R=R'.

S507: The UE reselects to a third cell in the third candidate cell based on the measurement value of the third candidate cell.

The UE determines the measurement value of the first-type cell and/or the measurement value of the second-type cell. If no best cell range (rangetobestcell) is not configured in a network, the UE may sort, in descending order of measurement values, cells included in the third candidate cell, and reselect to a cell with a largest measurement value. For example, if the third cell is the cell with the largest measurement value, the UE reselects to the third cell.

If a best cell range is configured in a network, the LTE may sort, in descending order of measurement values, cells included in the third candidate cell, and select a third-type cell from the cells. The third-type cell includes one or more cells. The third-type cell is a cell whose measurement value is in a first interval. The first interval may indicate the best cell range, or the first interval may be another interval range. Each cell has a corresponding quantity of downlink beams (beam), and the LTE may reselect to a cell that corresponds to a largest quantity of downlink beams in the third-type cell. For example, if the third cell is the cell that corresponds to the largest quantity of downlink beams in the third-type cell, the UE reselects to the third cell. If there are a plurality of cells that correspond to the largest quantity of downlink beams in the third-type cell, the UE may reselect to a cell with a largest measurement value in the plurality of cells. For example, if the largest quantity of downlink beams corresponding to the third-type cell is 5, and there are two cells corresponding to five downlink beams, the UE may reselect to a cell with a larger measurement value in the two cells. For example, the two cells include a third cell and a fourth cell, and a measurement value of the third cell is greater than that of the fourth cell. In this case, the UE may reselect to the third cell.

Alternatively, after selecting the third-type cell, the UE may reselect to a cell, in the third-type cell, that has a largest quantity of downlink beams whose communication quality is greater than a first quality threshold. Each cell has a corresponding downlink beam, and each downlink beam has respective communication quality. Communication quality of some downlink beams may be poor. For example, the communication quality is less than or equal to the first quality threshold. Communication quality of some downlink beams may be good. For example, the communication quality is greater than the first quality threshold. In this case, it is equivalent to that the UE may select a cell that has a large quantity of downlink beams whose communication quality is good. For example, the first quality threshold is configured by the network device, or is determined by the UE, or may be specified in a protocol. For example, the third cell in the third-type cell has five downlink beams in total, communication quality of three downlink beams is greater than the first quality threshold, and a quantity of downlink beams that are of another cell in the third-type cell and whose communication quality is greater than the first quality threshold is less than 3. In this case, the UE reselects to the third cell. If there are a plurality of cells that have a same largest quantity of downlink beams greater than the first quality threshold in the third-type cell, the UE may reselect to a cell with a largest measurement value in the plurality of cells. For example, the third cell in the third-type cell has five downlink beams in total, and communication quality of three downlink beams is greater than the first quality threshold. The fourth cell has four downlink beams in total, and communication quality of three downlink beams is greater than the first quality threshold. A quantity of downlink beams that are of another cell in the third-type cell and whose communication quality is greater than the first quality threshold is less than 3. In this case, the LTE may perform selection on the third cell and the fourth cell. For example, if the measurement value of the third cell is greater than the measurement value of the fourth cell, the UE reselects to the third cell.

It can be learned that, the LTE additionally adds $offset_n$ for the cell that supports coverage enhancement, and a larger coverage enhancement gain of the neighbor cell indicates a larger value of $offset_n$ of the neighbor cell. This is equivalent to increasing a measurement value of the cell that supports coverage enhancement, so that the UE can more easily reselect to the cell that supports coverage enhancement, thereby improving communication quality of the UE.

If the first message indicates whether the neighbor cell supports coverage enhancement, regardless of whether the first message indicates whether the redcap UE is supported, the UE may select a cell based on the manner described in S506 and S507. Alternatively, if the first message does not indicate whether the neighbor cell supports coverage enhancement but indicates whether the neighbor cell supports the redcap UE, the third candidate cell determined by the UE may be a cell that supports the redcap UE, and then the UE selects a cell from the third candidate cell in an existing manner.

S508: The UE determines a first portion of cells from the third candidate cell, where the first portion of cells include at least one cell.

If no first candidate cell meets the first condition, the UE may determine the measurement value of the first-type cell. Alternatively, if no first candidate cell meets the first condition, and no second candidate cell meets the second condition, the UE may determine the first portion of cells from the third candidate cell.

In a first optional implementation of the first portion of cells, the first portion of cells are cells whose measurement values are greater than a seventh threshold. This implementation is applicable to a case in which no best cell range is configured for a network. For example, the UE selects cells whose measurement values are greater than the seventh threshold from the third candidate cell, and this portion of cells are the first portion of cells. In this implementation, $offset_n$ does not need to be added for the cell that supports coverage enhancement, but the seventh threshold is set for the first parameter (for example, the RSRP or the RSRQ), and reselection is performed in a cell that exceeds the seventh threshold. Compared with the solution in which $offset_n$ is added to the cell that supports coverage enhancement, this implementation is simpler.

In a second optional implementation of the first portion of cells, measurement values of the first portion of cells are all in a first interval, and quantities of downlink beams corresponding to the first portion of cells are all greater than a ninth threshold. Alternatively, measurement values of the first portion of cells are all in a first interval, and quantities of downlink beams that correspond to the first portion of cells and whose communication quality is greater than a first quality threshold are greater than an eighth threshold. For example, the first interval indicates a best cell range. This implementation is applicable to a case in which a best cell range is configured for a network. For example, the eighth threshold is determined by the LTE, or is configured by a network device, or may be specified in a protocol. For example, the ninth threshold is determined by the UE, or is configured by a network device, or may be specified in a protocol. In this implementation, $offset_n$ does not need to be added for the cell that supports coverage enhancement, but the eighth threshold (or the ninth threshold) is set for the first parameter (for example, the RSRP or the RSRQ), and reselection is performed in a cell that exceeds the eighth threshold (or the ninth threshold). Compared with the solution in which $offset_n$ is added to the cell that supports coverage enhancement, this implementation is simpler.

In the two implementations of the first portion of cells, a measurement value of a cell in the third candidate cell may be determined based on a value of a first parameter obtained by the UE by measuring the cell. For example, if R represents the measurement value of the cell in the third candidate cell, and R' represents the value of the first parameter obtained by the UE by measuring the cell, the measurement value of the cell may meet R=R'.

In a third optional implementation of the first portion of cells, measurement values of the first portion of cells are all in a first interval. This implementation is applicable to a case in which a best cell range is configured for a network.

Selecting the first portion of cells is equivalent to setting a selection threshold. If no cell in the third candidate cells can meet a requirement of being selected to the first portion of cells, that is, no cell can be used as one of the first portion of cells, it indicates that there may be no cell with a better condition. In this case, the UE may not perform cell reselection, to reduce power consumption caused by cell reselection and also reduce a probability of reselecting to a poor cell.

S509: The UE reselects to a third cell in the first portion of cells.

If the first optional implementation of the first portion of cells is used, after determining the first portion of cells, the LTE may select, from the first portion of cells, a cell that supports coverage enhancement and has a largest measurement value, and reselect to the cell. For example, the first portion of cells include the third cell, a fourth cell, and a fifth cell, the third cell and the fifth cell support coverage enhancement, and the fourth cell does not support coverage enhancement. A value relationship between measurement values of the three cells is: a measurement value of the fourth cell > a measurement value of the third cell > a measurement value of the fifth cell. In this case, the UE may reselect to the third cell. In other words, during cell reselection, the UE not only considers the measurement value, but also considers the coverage enhancement support status, to reselect, as much as possible, to the cell that supports coverage enhancement.

If the second optional implementation of the first portion of cells is used, after determining the first portion of cells, the UE may reselect to a cell that supports coverage enhancement and that corresponds to a largest quantity of downlink beams in the first portion of cells. For example, in the first portion of cells, both a third cell and a fourth cell support coverage enhancement, and no other cell supports coverage enhancement. A quantity of downlink beams corresponding to the third cell is 5, and a quantity of downlink beams corresponding to the fourth cell is 4. In this case, the UE may reselect to the third cell.

Alternatively, if the second optional implementation of the first portion of cells is used, after determining the first portion of cells, the UE may reselect to a cell, in the first portion of cells, that supports coverage enhancement and that corresponds to a largest quantity of downlink beams whose communication quality is greater than the first quality threshold. For example, in the first portion of cells, both a third cell and a fourth cell support coverage enhancement, and no other cell supports coverage enhancement. A quantity of downlink beams corresponding to the third cell is 5, and communication quality of four downlink beams is greater than the first quality threshold. A quantity of downlink beams corresponding to the fourth cell is 4, and communication quality of three downlink beams is greater than the first quality threshold. In this case, the UE may reselect to the third cell.

If the third optional implementation of the first portion of cells is used, after determining the first portion of cells, the LTE may determine an adjustment value of a quantity of downlink beams of a cell that supports coverage enhancement in the first portion of cells. For example, the adjustment value of the quantity of downlink beams of the cell that supports coverage enhancement in the first portion of cells may be re-determined based on the quantity of downlink beams of the cell and a sixth parameter. The sixth parameter is, for example, represented as $offset_{n,b}$, where n represents an identifier of the cell, for example, a number or an ID of the cell, and b represents a downlink beam. The sixth parameter may be set based on a quantity of downlink beams of a cell. For different cells, a value of the sixth parameter may be different. Alternatively, for all cells that support coverage enhancement, the sixth parameter may be the same. In other words, a value of the sixth parameter is a fixed value. For example, the sixth parameter is set by the UE, or is configured by the network device, or may be specified in a protocol. There may be cells that do not support coverage enhancement in the first portion of cells. For these cells, there is no need to determine an adjustment value of a quantity of downlink beams. After determining the adjustment value of the quantity of downlink beams of the cell that supports coverage enhancement in the first part of the cells, the UE may reselect to the cell with the largest quantity of downlink beams in the first portion of cells. For a cell (for example, a cell that supports coverage enhancement) that has an adjustment value of a quantity of downlink beams, the LTE performs selection based on the adjustment value of the quantity of downlink beams of the cell instead of the quantity of downlink beams of the cell. However, for a cell (for example, a cell that does not support coverage enhancement) that does not have an adjustment value of a quantity of downlink beams, the LTE performs selection based on the quantity of downlink beams of the cell. For example, the first portion of cells include the third cell, a fourth cell, and a fifth cell. The third cell and the fourth cell each have an adjustment value of a quantity of downlink beams, and the fifth cell does not have an adjustment value of a quantity of downlink beams. For example, if the adjustment value of the quantity of downlink beams of the third cell is 5, the adjustment value of the quantity of downlink beams of the fourth cell is 4, and the adjustment value of the quantity of downlink beams of the fifth cell is 4, the UE reselects to the third cell. In this manner, the quantity of downlink beams, of the cell that supports coverage enhancement, that is used as a selection basis in a cell reselection process is increased, and it is also specified that UE reselects to the cell with the largest quantity of downlink beams. Therefore, this helps the UE reselect, as much as possible, to the cell that supports coverage enhancement, to improve communication quality of the UE. In this implementation, $offset_n$ does not need to be added to the cell that supports coverage enhancement, but $offset_{n,b}$ is added to the quantity of downlink beams of the cell that supports coverage enhancement. It can be learned that impact of coverage enhancement on cell reselection may be considered in a plurality of implementations, and the implementations are flexible.

If the first message indicates whether the neighbor cell supports coverage enhancement, regardless of whether the first message indicates whether the redcap UE is supported, the UE may select a cell based on the manner described in S508 and S509. Alternatively, if the first message does not indicate whether the neighbor cell supports coverage enhancement but indicates whether the neighbor cell supports the redcap UE, the third candidate cell determined by the UE may be a cell that supports the redcap UE, and then the UE selects a cell from the third candidate cell in an existing manner.

S510: The UE determines a measurement value of the third candidate cell.

If no first candidate cell meets the first condition, the UE may determine the measurement value of the first-type cell. Alternatively, if no first candidate cell meets the first condition, and no second candidate cell meets the second condition, the UE may determine the measurement value of the third candidate cell. The third candidate cell may include a plurality of types of cells. For example, the third candidate cell may include one or more of the following cells: a first-type cell, a second-type cell, a third-type cell, or a fourth-type cell. A quantity of cells included in the first-type cell may be greater than or equal to 0, and is less than or equal to a total quantity of cells included in the third candidate cell. A quantity of cells included in the second-type cell may be greater than or equal to 0, and is less than or equal to the total quantity of cells included in the third candidate cell. A quantity of cells included in the third-type cell may be greater than or equal to 0, and is less than or equal to the total quantity of cells included in the third candidate cell. A quantity of cells included in the fourth-type cell may be greater than or equal to 0, and is less than or equal to the total quantity of cells included in the third candidate cell. The first-type cell is a cell that does not support the redcap UE and does not support coverage enhancement, the second-type cell is a cell that supports the redcap LTE and does not support coverage enhancement, the third-type cell is a cell that does not support the redcap LTE and supports coverage enhancement, and the fourth-type cell is a cell that supports the redcap LTE and supports coverage enhancement. It can be learned that, the first-type cell in S510 and the first-type cell in S506 and S507 are different concepts; the second-type cell in S510 and the second-type cell in S506 and S507 are different concepts; and the third-type cell in S510 and the third-type cell in S506 and S507 are different concepts. For these types of cells, the UE may determine measurement values in corresponding manners.

For example, a measurement value of a cell in the first-type cell may be determined based on a value of a first parameter (for example, RSRP or RSRQ) obtained by the UE by measuring the cell. For example, if R represents the measurement value of the cell in the first-type cell, and R' represents a value of a second parameter obtained by the UE by measuring the cell, the measurement value of the cell may meet R=R'.

A measurement value of a cell in the second-type cell may be determined based on a value of a first parameter obtained by the UE by measuring the cell and a value of a fifth parameter of the cell, where the fifth parameter may indicate whether the cell supports the redcap LTE. For example, the fifth parameter is represented as $offset_{n,r}$ where n represents an identifier of the cell, for example, a number or an ID of the cell, and r represents redcap. For example, for a cell, if the cell does not support the redcap, a value of $offset_{n,r}$ of the cell is "0"; or if the cell supports the redcap, a value of $offset_{n,r}$ of the cell is "1". In this manner, whether the cell supports the redcap can be simply distinguished. For example, if R represents the measurement value of the cell in the second-type cell, and R' represents the value of the first parameter obtained by the UE by measuring the cell, the measurement value of the cell may meet the following relationship:

$$R=R'+offset_{n,r} \qquad \text{(Formula 14)}$$

A measurement value of a cell in the third-type cell may be determined based on a value of a first parameter obtained by the UE by measuring the cell and a value of a second parameter of the cell. For example, if R represents the measurement value of the cell in the third-type cell, and R' represents the value of the first parameter obtained by the UE by measuring the cell, the measurement value of the cell may meet the following relationship:

$$R=R'+offset_n \qquad \text{(Formula 15)}$$

A measurement value of a cell in the fourth-type cell may be determined based on a value of a first parameter obtained by the UE by measuring the cell, a value of a fifth parameter of the cell, and a value of a second parameter of the cell. For example, if R represents the measurement value of the cell in the fourth-type cell, and R' represents the value of the first parameter obtained by the UE by measuring the cell, the measurement value of the cell may meet the following relationship:

$$R=R'+offset_n+offset_{n,r} \qquad \text{(Formula 16)}$$

If the first message indicates whether the neighbor cell supports the redcap UE and indicates whether the neighbor cell supports coverage enhancement, for a manner of determining a value of a fifth parameter of a cell by the UE, refer to the foregoing descriptions. However, if the first message indicates whether the neighbor cell supports coverage enhancement but does not indicate whether the neighbor cell supports the redcap UE, the fifth parameter of the cell may not be considered when measurement values of the various types of cells in the third candidate cell are determined. For example, Formula 14 may be changed to R=R', and Formula 16 may be changed to R=R'+$offset_n$. In this case, it is equivalent to that the third candidate cell is classified into two types, where one type supports coverage enhancement, and the other type does not support coverage enhancement. Formula 14 is used for a cell that does not support coverage enhancement, and Formula 16 is used for a cell that supports coverage enhancement.

Alternatively, the first message may indicate whether the neighbor cell supports the redcap UE, but does not indicate whether the neighbor cell supports coverage enhancement. In this case, the second parameter of the cell may not be considered when measurement values of the various types of cells in the third candidate cell are determined. For example, Formula 15 may be changed to R=R', and Formula 16 may be changed to R=R'+$offset_{n,r}$. In this case, it is equivalent to that the third candidate cell is classified into two types, where one type supports the redcap UE, and the other type does not support the redcap LTE. Formula 15 is used for a cell that does not support the redcap UE, and Formula 16 is used for a cell that supports the redcap UE.

S511: The UE reselects to a third cell with a largest measurement value in the third candidate cell.

After determining, in the manner described in S510, measurement values of cells included in the third candidate cell, the UE may sort, in descending order of the measurement values, the measurement values corresponding to the third candidate cell, and reselect to the cell with the largest measurement value. For example, if the third cell is the cell with the largest measurement value, the UE reselects to the third cell.

In the solution of S510 and S511, there is no need to select a portion of cells from the third candidate cells by using a corresponding condition, thereby reducing a cell selection process. In addition, in this solution, the fifth parameter is also set for the cell that supports the redcap UE, and the fifth parameter and the second parameter respectively indicate support for the redcap UE and the coverage enhancement gain. During reselection of a cell on the same frequency or the same priority, the UE can preferentially reselect to a cell that supports the redcap UE and supports coverage enhancement, to improve communication quality of the UE.

In this embodiment of this application, a relationship is established between a determining condition for performing cell reselection by the UE and a coverage enhancement support status of a cell, and impact of coverage enhancement on cell reselection is considered. In this manner, the UE can more easily reselect to a cell that supports coverage enhancement, thereby improving communication quality of the UE. Optionally, a relationship may be further established between the determining condition for performing cell reselection by the UE and a redcap UE supporting status of a cell. In this way, the UE can reselect, as much as possible, to a cell that supports coverage enhancement and supports the redcap UE, and a probability that the UE reselects to a cell that does not support the redcap UE is reduced.

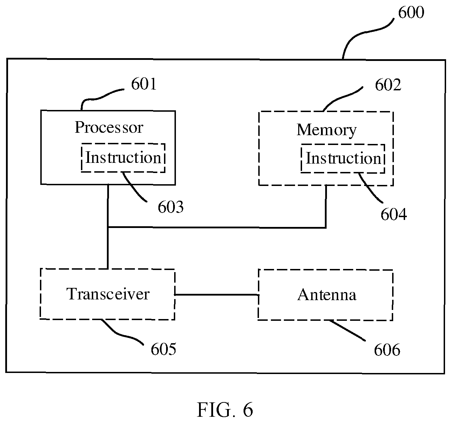

FIG. 6 is a schematic diagram of a structure of a communication apparatus 600 according to an embodiment of this application. The communication apparatus 600 may be the terminal device in the embodiment shown in FIG. 5, and is configured to implement the method performed by the terminal device in the foregoing method embodiments. Alternatively, the communication apparatus 600 may be the network device in the embodiment shown in FIG. 5, and is configured to implement the method corresponding to the network device in the foregoing method embodiments. For a specific function, refer to the description in the method embodiments.

The communication apparatus 600 includes one or more processors 601. The processor 601 may also be referred to as a processing unit, and may implement a specific control function. The processor 601 may be a general-purpose processor, a dedicated-purpose processor, or the like. For example, the processor includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to control the communication apparatus 600, execute a software program, and/or process data. Different processors may be independent components, or may be integrated into one or more processors, for example, integrated into one or more application-specific integrated circuits.

Optionally, the communication apparatus 600 includes one or more memories 602, configured to store instructions 604. The instructions 604 may be run on the processor, so that the communication apparatus 600 performs the method described in the foregoing method embodiments. Optionally, the memory 602 may further store data. The processor and the memory may be separately disposed, or may be integrated together.

Optionally, the communication apparatus 600 may include instructions 603 (which may also be referred to as code or a program sometimes). The instructions 603 may be run on the processor, so that the communication apparatus 600 performs the method described in the foregoing embodiments. The processor 601 may store data.

Optionally, the communication apparatus 600 may further include a transceiver 605 and an antenna 606. The transceiver 605 may be referred to as a transceiver unit, a transceiver, a transceiver circuit, an input/output interface, or the like, and is configured to implement a transceiver function of the communication apparatus 600 through the antenna 606.

Optionally, the communication apparatus 600 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 600 may include more or fewer components, or some components are integrated, or some components are split. These components may be implemented by hardware, software, or a combination of software and hardware.

The processor 601 and the transceiver 605 described in this embodiment of this application may be implemented on an integrated circuit (integrated circuit, IC), an analog IC, a radio frequency integrated circuit (radio frequency identification, RFID), a mixed signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

An embodiment of this application provides a terminal device. The terminal device (referred to as UE for ease of description) may be used in the foregoing embodiments. The terminal device includes corresponding means (means), units, and/or circuits for implementing functions of the terminal device in the embodiment shown in FIG. 5. For example, the terminal device includes a transceiver module, configured to support the terminal device in implementing a receiving and sending function; and a processing module, configured to support the terminal device in processing a signal.

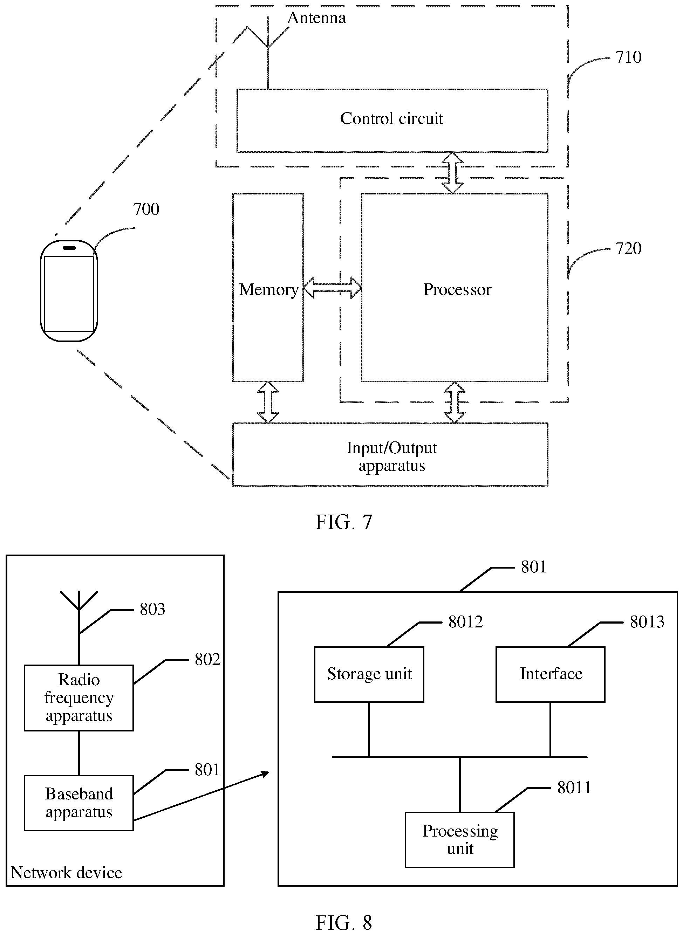

FIG. 7 is a schematic diagram of a structure of a terminal device according to an embodiment of this application.

The terminal device 700 may be applied to the architecture shown in FIG. 4. For ease of description, FIG. 7 shows only main components of the terminal device 700. As shown in FIG. 7, the terminal device 700 includes a processor, a memory, a control circuit, an antenna, and an input/output apparatus. The processor is mainly configured to: process a communication protocol and communication data, control the entire terminal device 700, execute a software program, and process data of the software program. The memory is mainly configured to store a software program and data. The control circuit is mainly configured to perform conversion between a baseband signal and a radio frequency signal and process the radio frequency signal. The antenna is mainly configured to receive/send a radio frequency signal in a form of an electromagnetic wave. The input/output apparatus, for example, a touchscreen, a display, a microphone, or a keyboard, is mainly configured to receive data input by a user and output data to the user.

For example, the terminal device 700 is a mobile phone. After the terminal device 700 is powered on, the processor may read a software program in a storage unit, interpret and execute instructions of the software program, and process data of the software program. When data needs to be sent wirelessly, after performing baseband processing on the to-be-sent data, the processor outputs a baseband signal to the control circuit, and after performing radio frequency processing on the baseband signal, the control circuit sends a radio frequency signal in a form of an electromagnetic wave through the antenna. When data is sent to the terminal device 700, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 7 shows only one memory and only one processor. In some embodiments, the terminal device 700 may include a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire terminal device 700, execute the software program, and process the data of the software program. The processor in FIG. 7 integrates functions of the baseband processor and the central processing unit. A person skilled in the art may understand that the baseband processor and the central processing unit may alternatively be processors independent of each other, and are interconnected by using a technology such as a bus. The terminal device 700 may include a plurality of baseband processors to adapt to different network standards, the terminal device 700 may include a plurality of central processing units to enhance a processing capability of the terminal device 700, and components of the terminal device 700 may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor; or may be stored in the storage unit in a form of a software program, and the processor executes the software program to implement a baseband processing function.

In an example, the antenna and the control circuit that have receiving and sending functions may be considered as a transceiver unit 710 of the terminal device 700, and the processor having a processing function may be considered as a processing unit 720 of the terminal device 700. As shown in FIG. 7, the terminal device 700 includes the transceiver unit 710 and the processing unit 720. The transceiver unit may also be referred to as a transceiver, a transceiver machine, a transceiver apparatus, or the like. Optionally, a component that is in the transceiver unit 710 and that is configured to implement a receiving function may be considered as a receiving unit, and a component that is in the transceiver unit 710 and that is configured to implement a sending function may be considered as a sending unit. In other words, the transceiver unit 710 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like.

An embodiment of this application further provides a network device. The network device may be used in the foregoing embodiments. The network device includes means (means), units, and/or circuits for implementing, for example, functions of the network device, in the embodiment shown in FIG. 5. For example, the network device includes a transceiver module, configured to support the network device in implementing a receiving and sending function; and a processing module, configured to support the network device in processing a signal.

FIG. 8 is a schematic diagram of a structure of a network device according to an embodiment of this application. As shown in FIG. 8, the network device may be applied to the architecture shown in FIG. 4. The network device includes a baseband apparatus 801, a radio frequency apparatus 802, and an antenna 803. In an uplink direction, the radio frequency apparatus 802 receives, through the antenna 803, information sent by a terminal device, and sends, to the baseband apparatus 801 for processing, the information sent by the terminal device. In a downlink direction, the baseband apparatus 801 processes information of the terminal device, and sends the information to the radio frequency apparatus 802. The radio frequency apparatus 802 processes the information of the terminal device, and then sends processed information to the terminal device through the antenna 803.

The baseband apparatus 801 includes one or more processing units 8011, a storage unit 8012, and an interface 8013. The processing unit 8011 is configured to support the network device in performing a function of the network device in the foregoing method embodiments. The storage unit 8012 is configured to store a software program and/or data. The interface 8013 is configured to exchange information with the radio frequency apparatus 802, and the interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated together to form a chip. The storage unit 8012 may be located in a same chip as the processing unit 8011, that is, in an on-chip storage element. Alternatively, the storage unit 8012 may be located in a chip different from that of the processing unit 8011, that is, in an off-chip storage element. The storage unit 8012 may be one memory, or may be a general term of a plurality of memories or storage elements.

The network device may implement some or all of the steps in the foregoing method embodiments in a form of scheduling a program by using one or more processing units. For example, corresponding functions of the network device in the embodiment shown in FIG. 5 are implemented. The one or more processing units may support radio access technologies of a same standard, or may support radio access technologies of different standards.

A person of ordinary skill in the art may be aware that, units and steps of the examples described in combination with embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synlink dynamic random access memory (synchlink DRAM, SLDRAM), or a direct rambus dynamic random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## EP 4 297 491 A1

**Claims**

1. A cell reselection method, applied to a terminal device, wherein the method comprises:

   during cell reselection, determining whether a cell in a first candidate cell meets a first condition, wherein the first candidate cell comprises one or more cells; and
   when a first cell in the first candidate cell meets the first condition, reselecting to the first cell, wherein
   that the first cell meets the first condition comprises:
   the first cell meets that a value of a first parameter is greater than a first value in first duration, wherein the first value is related to a second parameter of the first cell, and the second parameter indicates a coverage enhancement gain of a cell.

2. The method according to claim 1, wherein the first parameter is RSRQ or RSRP.

3. The method according to claim 2, wherein

   the first parameter is the RSRQ, the first value is a difference between a first threshold and a value of the second parameter of the first cell, and the first threshold is a value threshold of RSRQ of the cell during cell reselection; and/or
   the first parameter is the RSRP, the first value is a difference between a second threshold and a value of the second parameter of the first cell, and the second threshold is a value threshold of RSRP of the cell during cell reselection.

4. The method according to claim 2, wherein
   the first value is related to the second parameter and a third parameter, and the third parameter indicates a coverage enhancement gain of a serving cell of the terminal device.

5. The method according to claim 4, wherein

   the first parameter is the RSRQ, $S=Q+offset_s - offset_n$, S represents the first value, Q represents a first threshold, $offset_s$ represents a value of the third parameter, $offset_n$ represents a value of the second parameter of the first cell, and the first threshold is a value threshold of RSRQ of the first cell during cell reselection; and/or
   the first parameter is the RSRP, $S=P+offset_s - offset_n$, S represents the first value, $offset_s$ represents a value of the third parameter, $offset_n$ represents a value of the second parameter of the first cell, P represents a second threshold, and the second threshold is a value threshold of RSRP of the first cell during cell reselection.

6. The method according to any one of claims 1 to 5, wherein the method further comprises:

   when no first candidate cell meets the first condition, determining whether a cell in a second candidate cell meets a second condition; and
   when a second cell in the second candidate cell meets the second condition, reselecting to the second cell, wherein
   that the second cell meets the second condition comprises:
   the serving cell of the terminal device meets that a value of the first parameter is less than a second value in the first duration, and the second cell meets that a value of the first parameter is greater than a third value in the first duration, wherein the second value is related to a third parameter, the third value is related to the second parameter of the second cell, and the third parameter indicates the coverage enhancement gain of the serving cell.

7. The method according to claim 6, wherein

   the first parameter is the RSRQ, the second value is a sum of a third threshold and a value of the third parameter, and the third threshold is a value threshold of RSRQ of the serving cell during cell reselection; and/or
   the first parameter is the RSRP, the second value is a sum of a fourth threshold and a value of the third parameter, and the fourth threshold is a value threshold of RSRP of the serving cell during cell reselection.

8. The method according to claim 6 or 7, wherein

the first parameter is the RSRQ, the third value is a difference between a fifth threshold and a value of the second parameter of the second cell, and the fifth threshold is the value threshold of the RSRQ of the cell during cell reselection; and/or

the first parameter is the RSRP, the third value is a difference between a sixth threshold and a value of the second parameter of the second cell, and the sixth threshold is the value threshold of the RSRP of the cell during cell reselection.

9. The method according to any one of claims 1 to 5, wherein the method further comprises:

when no first candidate cell meets the first condition, determining a measurement value of a third candidate cell, wherein the third candidate cell comprises a first-type cell and a second-type cell, the first-type cell supports coverage enhancement, the second-type cell does not support coverage enhancement, and a measurement value of the first-type cell is determined based on a value of a first parameter obtained by the terminal device by measuring the first-type cell and a value of a second parameter of the first-type cell; and

reselecting to a third cell in the third candidate cell based on the measurement value of the third candidate cell.

10. The method according to claim 9, wherein

the third cell is a cell with a largest measurement value in the third candidate cell; or

the third cell is a cell whose measurement value is in a first interval and that corresponds to a largest quantity of downlink beams that are greater than a first quality threshold, and the first interval indicates a best cell range.

11. The method according to any one of claims 1 to 5, wherein the method further comprises:

when no first candidate cell meets the first condition, determining a first portion of cells from a third candidate cell, wherein the first portion of cells comprise at least one cell; and

reselecting to a third cell in the at least one cell.

12. The method according to claim 11, wherein a measurement value of the at least one cell is greater than a seventh threshold, and a measurement value of one of the at least one cell is determined based on a value of a first parameter obtained by the terminal device by measuring the cell.

13. The method according to claim 12, wherein the third cell is a cell that supports coverage enhancement and has a largest measurement value in the at least one cell.

14. The method according to claim 11, wherein a measurement value of the at least one cell is in a first interval, a quantity of downlink beams that correspond to the at least one cell and that are greater than a first quality threshold is greater than an eighth threshold, and the first interval indicates a best cell range.

15. The method according to claim 14, wherein the third cell is a cell, in the at least one cell, that supports coverage enhancement and that corresponds to a largest quantity of downlink beams that are greater than a first quality threshold.

16. The method according to claim 11, wherein a measurement value of the at least one cell is in a first interval.

17. The method according to claim 16, wherein the method further comprises:
determining an adjustment value of a quantity of downlink beams of a cell that supports coverage enhancement and that is in the at least one cell, wherein the adjustment value is determined based on the quantity of downlink beams of the cell that supports coverage enhancement and a fourth parameter, and the fourth parameter indicates a quantity of downlink beams of a cell.

18. The method according to claim 17, wherein the third cell is a cell that corresponds to a largest quantity of downlink beams in the at least one cell.

19. The method according to any one of claims 1 to 5, wherein the method further comprises:

when no first candidate cell meets the first condition, determining a measurement value of a third candidate cell; and

reselecting to a third cell with a largest measurement value in the third candidate cell, wherein the determining a measurement value of a third candidate cell comprises one or more of the following:

a measurement value of a first-type cell comprised in the third candidate cell is determined based on a value of a first parameter obtained by the terminal device by measuring the first-type cell, the first-type cell comprises one or more cells, and the first-type cell is a cell that does not support coverage enhancement or a reduced capability terminal device;

a measurement value of a second-type cell comprised in the third candidate cell is determined based on a value of a first parameter obtained by the terminal device by measuring the second-type cell and a value of a fifth parameter of the second-type cell, the second-type cell comprises one or more cells, the second-type cell is a cell that does not support coverage enhancement but supports a reduced capability terminal device, and the fifth parameter indicates whether the reduced capability terminal device is supported;

a measurement value of a third-type cell comprised in the third candidate cell is determined based on a value of a first parameter obtained by the terminal device by measuring the third-type cell and a value of a second parameter of the third-type cell, the third-type cell comprises one or more cells, and the third-type cell is a cell that supports coverage enhancement but does not support a reduced capability terminal device; or

a measurement value of a fourth-type cell comprised in the third candidate cell is determined based on a value of a first parameter obtained by the terminal device by measuring the fourth-type cell, a value of a fifth parameter of the fourth-type cell, and a value of a second parameter of the fourth-type cell, the fourth-type cell comprises one or more cells, the fourth-type cell is a cell that supports coverage enhancement and a reduced capability terminal device, and the fifth parameter indicates whether the reduced capability terminal device is supported.

20. The method according to any one of claims 1 to 19, wherein the method further comprises:
receiving a first message from the serving cell, wherein the first message indicates whether a neighbor cell of the serving cell supports the reduced capability terminal device and/or supports coverage enhancement.

21. The method according to claim 20, wherein that the first message indicates whether the neighbor cell supports the reduced capability terminal device comprises:

the first message comprises first indication information, and the first indication information indicates that the neighbor cell supports the reduced capability terminal device or does not support the reduced capability terminal device;

when comprising first indication information, the first message indicates that the neighbor cell supports the reduced capability terminal device; or when not comprising first indication information, the first message indicates that the neighbor cell does not support the reduced capability terminal device;

when comprising a value of a fifth parameter of the neighbor cell, the first message indicates that the neighbor cell supports the reduced capability terminal device; or when not comprising a value of a fifth parameter of the neighbor cell, the first message indicates that the neighbor cell does not support the reduced capability terminal device, wherein the fifth parameter indicates whether the reduced capability terminal device is supported; or when a value of a fifth parameter of the neighbor cell comprised in the first message is not equal to 0, the first message indicates that the neighbor cell supports the reduced capability terminal device; or when a value of a fifth parameter of the neighbor cell comprised in the first message is equal to 0, the first message indicates that the neighbor cell does not support the reduced capability terminal device, wherein the fifth parameter indicates whether the reduced capability terminal device is supported.

22. The method according to claim 20, wherein that the first message indicates whether the neighbor cell supports the reduced capability terminal device comprises one or more of the following:

when indicating that the neighbor cell supports coverage enhancement, the first message indicates that the neighbor cell supports the reduced capability terminal device; or when indicating that the neighbor cell does not support coverage enhancement, the first message indicates that the neighbor cell does not support the reduced capability terminal device;

when indicating that the neighbor cell configures a random access resource for the reduced capability terminal device, the first message indicates that the neighbor cell supports the reduced capability terminal device; or when indicating that the neighbor cell does not configure a random access resource for the reduced capability terminal device, the first message indicates that the neighbor cell does not support the reduced capability terminal device; or

when indicating that the neighbor cell configures an initial uplink BWP for the reduced capability terminal device, the first message indicates that the neighbor cell supports the reduced capability terminal device; or when indicating that the neighbor cell does not configure an initial uplink BWP for the reduced capability terminal device, the first message indicates that the neighbor cell does not support the reduced capability terminal device.

23. The method according to any one of claims 20 to 22, wherein that the first message indicates whether the neighbor cell supports coverage enhancement comprises one or more of the following:

when comprising a value of a second parameter of the neighbor cell, the first message indicates that the neighbor cell supports coverage enhancement; or when not comprising a value of a second parameter of the neighbor cell, the first message indicates that the neighbor cell does not support coverage enhancement;

when a value of a second parameter of the neighbor cell comprised in the first message is not equal to 0, the first message indicates that the neighbor cell supports coverage enhancement; or when a value of a second parameter of the neighbor cell comprised in the first message is equal to 0, the first message indicates that the neighbor cell does not support coverage enhancement;

the first message comprises second indication information, and the second indication information indicates whether the neighbor cell supports coverage enhancement or does not support coverage enhancement; or

when comprising second indication information, the first message indicates that the neighbor cell supports coverage enhancement; or when not comprising second indication information, the first message indicates that the neighbor cell does not support coverage enhancement.

24. A terminal device, comprising:

one or more processors;

one or more memories; and

one or more computer programs, wherein the one or more computer programs are stored in the one or more memories, the one or more computer programs comprise instructions, and when the instructions are executed by the one or more processors of the terminal device, the terminal device is enabled to perform the method according to any one of claims 1 to 23.

25. A computer-readable storage medium, wherein the computer-readable storage medium is configured to store a computer program, and when the computer program is run on a computer, the computer is enabled to perform the method according to any one of claims 1 to 23.

26. A chip, comprising one or more processors and a communication interface, wherein the one or more processors are configured to read instructions to perform the method according to any one of claims 1 to 23.

FIG. 1

FIG. 2

FIG. 3

FIG. 4

```
┌─────────────┐                                      ┌─────────────┐
│     UE      │                                      │   Network   │
│             │                                      │   device    │
└──────┬──────┘                                      └──────┬──────┘
       │  S501: First message, indicating whether a neighbor cell
       │  supports reduced capability UE and/or supports coverage
       │◀─ ─ enhancement (transmission in a serving cell) ─ ─ ─ ─ ─┤
```

S502: During cell reselection, determine whether a cell in a first candidate cell meets a first condition, where the first condition is related to whether the first candidate cell supports coverage enhancement

S503: When a first cell in the first candidate cell meets the first condition, reselect to the first cell

S504: Determine whether a cell in a second candidate cell meets a second condition, where the second condition is related to whether the second candidate cell supports coverage enhancement

S505: When a second cell in the second candidate cell meets the second condition, reselect to the second cell

S506: Determine a measurement value of a first-type cell in a third candidate cell, where the first-type cell supports coverage enhancement

S507: Reselect to a third cell in the third candidate cell based on a measurement value of the third candidate cell

S508: Determine a first portion of cells from a third candidate cell

S509: Reselect to a third cell in the first portion of cells

S510: Determine a measurement value of a third candidate cell

S511: Reselect to a cell with a largest measurement value in the third candidate cell

FIG. 5

600

601

602

Processor

Instruction

603

Memory

Instruction

604

Transceiver

605

Antenna

606

FIG. 6

FIG. 7

FIG. 8

## INTERNATIONAL SEARCH REPORT

| International application No. |
| --- |
| **PCT/CN2022/077278** |

| A. | CLASSIFICATION OF SUBJECT MATTER |
| --- | --- |
| | H04W 48/20(2009.01)i |

According to International Patent Classification (IPC) or to both national classification and IPC

| B. | FIELDS SEARCHED |
| --- | --- |

Minimum documentation searched (classification system followed by classification symbols)

H04W, H04L

Documentation searched other than minimum documentation to the extent that such documents are included in the fields searched

Electronic data base consulted during the international search (name of data base and, where practicable, search terms used)

CNPAT, WPI, EPODOC, 3GPP, GOOGLE: 降低能力, 质量, 阈值, 门限, 增强, 覆盖, 扩展, Redcap, RSRP, RSRQ, threshold, offset, enhance+, coverage

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | QUALCOMM INC. "Impact of reduced capabilities on upper-layer procedures" *3GPP TSG-RAN WG2 Meeting #113-e R2-2100311,* 15 January 2021 (2021-01-15), sections 2.2 and 2.4 | 1-26 |
| X | QUALCOMM INC. "Impact of reduced capabilities on idle mode procedures" *3GPP TSG-RAN WG2 Meeting #112-e R2-2008890,* 23 October 2020 (2020-10-23), section 2.2 | 1-26 |
| A | CN 111656813 A (BEIJING XIAOMI MOBILE SOFTWARE CO., LTD.) 11 September 2020 (2020-09-11) entire document | 1-26 |
| A | WO 2020032748 A1 (LG ELECTRONICS INC.) 13 February 2020 (2020-02-13) entire document | 1-26 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 April 2022** | **28 April 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/077278**

| Patent document cited in search report | | | Publication date (day/month/year) | Patent family member(s) | | | Publication date (day/month/year) |
|---|---|---|---|---|---|---|---|
| CN | 111656813 | A | 11 September 2020 | WO | 2021203309 | A1 | 14 October 2021 |
| WO | 2020032748 | A1 | 13 February 2020 | US | 2021274556 | A1 | 02 September 2021 |
| | | | | DE | 112019003172 | T5 | 18 March 2021 |

Form PCT/ISA/210 (patent family annex) (January 2015)

**REFERENCES CITED IN THE DESCRIPTION**

**Patent documents cited in the description**

- CN 202110225663

- CN 202110284775